# FASCICULE DE BREVET EUROPEEN

(11) **EP 0 421 845 B1**
(45) Date de publication et mention de la délivrance du brevet: **28.08.1996**
(21) Numéro de dépôt: 90402663.0
(22) Date de dépôt: 27.09.1990
(51) Int. Cl.: G06F 12/02, G06F 12/10

(54) **Procédé d'exploitation de la mémoire dans un système informatique du type à adressage virtuel et dispositif pour la mise en oeuvre dudit procédé**
Virtuelles Adressierungsverfahren zum Betrieb eines Speichers in einer Datenverarbeitungsanlage und Einrichtung zur Ausführung besagten Verfahrens
Virtual addressing method to operate a memory in a computer system and device for carrying out said method

(30) Priorité: 06.10.1989 FR 8913110
(43) Date de publication de la demande: 10.04.1991
(73) Titulaire: BULL S.A., 78430 Louveciennes (FR)
(72) Inventeur: Dorotte, Michel, F-75116 (FR)
(74) Mandataire: Colombe, Michel

(56) Documents cités:
- EP-A- 0 208 429
- EP-A- 0 230 354
- DE-A- 2 046 834
- ELECTRONICS, vol. 55, no. 4, février 1982, pages 133-137; P. HELLER et al.: "Memory protection moves onto 16-bit microprocessor chip"

## Description

L'invention concerne un procédé d'exploitation de la mémoire dans un système informatique de type à adressage virtuel et un système informatique pour la mise en oeuvre dudit procédé.

Le concept connu d'adressage virtuel (ou mémoire virtuelle) permet d'offrir au système et à ses utilisateurs une capacité mémoire logique bien supérieure à celle de la mémoire physique. En association avec le concept de segmentation également connu qui permet de diviser la mémoire virtuelle en zones (appelés segments) indépendantes les unes des autres, l'adressage virtuel s'est révélé particulièrement bien adapté à la multi programmation et au multitraitement.

Par exemple, le document DE-A-2046834 décrit un mode d'exploitation de la mémoire virtuelle d'un système informatique. Ce mode d'exploitation met en oeuvre un domaine unique et se base sur la génération de segments de longueur variable et l'utilisation d'une table de longueur des segments. Le résultat recherché est l'optimisation de l'utilisation de l'espace mémoire disponible par adaptation au besoin réel de la longueur de chaque segment utilisé.

Le document Electronics, vol. 55, n° 4 février 1982, page 133-137 ; P. Heller et al. propose d'intégrer dans le silicium d'un microprocesseur, certains mécanismes d'adressage virtuel jusqu'alors mis en oeuvre dans les systèmes informatiques, de niveau supérieur à celui du microprocesseur.

Toujours selon cet article, l'adressage virtuel requiert des moyens de protection plus complexes que l'adressage physique. Il est préférable d'utiliser un mécanisme d'adressage permettant également l'intégration des moyens de protection de systèmes de niveau supérieur. Toujours dans un domaine mémoire unique avec des segments de longueur variable, un descripteur est associé à chaque segment et contient une information sur la longueur de ce dernier. La dimension du domaine mémoire est déterminée par l'intégration de ces mécanismes dans le silicium.

Dans un contexte plus général, l'augmentation régulière et significative de la capacité des composants physiques constituant la mémoire d'un système informatique (les mémoires vives dynamiques DRAM de 1 Mo sont actuellement disponibles sur le marché) nécessite une augmentation correspondant des mémoires virtuelles. Toutefois les concepteurs de système d'exploitation pour systèmes informatiques se trouvent confrontés à divers problèmes liés à l'adressage, parmi lesquels :
- la dimension du format d'adressage devient insuffisante et doit être étendue.
- le nouveau système d'exploitation à adressage étendu doit être compatible avec l'ancien pour permettre, tout du moins pendant une période de transition assez longue, l'exécution des programmes utilisateurs existants conçus selon l'ancien système d'exploitation.

L'invention a pour objectif un procédé d'exploitation de mémoire virtuelle à grande capacité qui répond à l'exigence de compatibilité avec beaucoup de souplesse pour les utilisateurs.

Plus particulièrement l'invention propose un procédé d'exploitation de la mémoire dans un système informatique du type à adressage virtuel selon la revendication 1.

Grâce à l'affectation temporaire d'un des espaces d'adressage interchangeables EAX au domaine DL et au reformatage particulier des adressages selon les deux dimensions d'adresses disponibles NL et NX (par exemple 32 et 64 bits) la nouvelle organisation de la mémoire offre la possibilité d'utiliser concurremment les deux dimensions d'adresses. L'organisation de la mémoire virtuelle selon l'invention apparaît ainsi comme bien supérieure à une simple extension linéaire de mémoire qui n'offre pas la possibilité pour les programmes existants de profiter de cette extension.

Selon un autre mode de mise en oeuvre du procédé conforme à l'invention revendiquée, le domaine mémoire DL comporte un espace d'adressage permanent EAPCB de structure identique à celle des espaces d'adressage EAX, l'espace EAPCB étant repérable dans le domaine DX par un identificateur de valeur égale à zéro.

Avantageusement les espaces d'adressage sont du type segmenté, de façon optionnelle à plusieurs dimensions et/ou partageables par plusieurs processus.

Selon encore un autre mode de mise en oeuvre du procédé selon l'invention, on définit dans le domaine mémoire DX, une pluralité de segments accessibles à partir d'un second format d'adressage FX2 de dimension NX.

La mise en oeuvre du procédé selon l'invention revendiquée montre toute sa souplesse au niveau de l'exécution des processus par le système informatique. Plus particulièrement, selon encore une autre variante de l'invention :
- on choisit pour les espaces d'adressage de dimension NL, les espaces EAX et éventuellement l'espace EAPCB, des descripteurs de procédure PD de structure de base identique,
- on définit des descripteurs de changement d'espace d'adressage (ci-après appelés CASD) de structure de base identique à celle des descripteurs de procédure PD,
- on organise à partir d'un processus exécutable dans un espace d'adressage donné, l'appel d'une procédure exécutable dans un autre espace d'adressage par l'intermédiaire d'un descripteur de type CASD.

Avantageusement les descripteurs de type CASD comportent un champ destiné à recevoir l'identificateur de l'espace d'adressage contenant la procédure appelée et le pointeur de la procédure appelée dans le nouvel espace d'adressage.

Ainsi un programme existant conçu selon le mode d'adressage de dimension limitée DL est susceptible par le jeu des appels de procédures dans d'autres espaces d'adressage de profiter pleinement des nouvelles capacités du système. Il est par ailleurs possible pour ces anciens programmes d'être contenus en entier y compris le code dans les nouveaux espaces d'adressage.

L'invention concerne également un système informatique comportant les moyens matériels et logiciels pour mettre en oeuvre le procédé présenté ci-avant dans toutes ses variantes. Plus précisément le système informatique comporte un sous-système central structuré autour d'un ou plusieurs processeurs centraux (CPU) et d'une mémoire centrale, chaque processeur comprenant des moyens micro-programmés pour effectuer la gestion de la mémoire centrale et de contrôleurs d'entrée/sortie IOC vers des sous-systèmes périphériques, notamment du type mémoire de masse de capacité suffisante pour l'adressage virtuel et des moyens logiciels, notamment un ensemble de programmes regroupés sous le nom de système d'exploitation, pour permettre en association avec les moyens micro-programmés la mise en oeuvre du procédé.

L'invention est maintenant décrite en se référant aux dessins ci-annexés dans lesquels :
- la figure 1 est un schéma d'un système informatique mettant en oeuvre le procédé selon l'invention,
- la figure 2 est une représentation schématique de la segmentation de la mémoire virtuelle selon l'invention,
- la figure 3 est une représentation schématique de l'organisation des domaines mémoire en 32 et 64 bits selon l'invention,
- la figure 4 est une représentation du format FX2 d'un premier descripteur de données 4GB/ITS64 de dimension 64 bits conforme à l'invention,
- la figure 5 est une représentation schématique du développement d'adressage à partir du descripteur illustré sur la figure 4,
- la figure 6 est une représentation schématique du format FX1 d'un autre descripteur de données 64K/4MB/ITS64 de dimension 64 bits conforme à l'invention,
- la figure 7 est une représentation schématique d'un développement d'adressage à partir du descripteur illustré sur la figure 6,
- la figure 8 est une représentation schématique du format FL du descripteur de données 64K/4MB/ITS32 de dimension 32 bits utilisé dans la mise en oeuvre de l'invention,
- la figure 9 est un représentation schématique du format du registre CSR conforme à l'invention,
- la figure 10 est une représentation schématique du format d'un descripteur d'adresse absolue en mémoire physique AA64 de dimension 64 bits conforme à l'invention,
- la figure 11 (figures 11(1) et 11(2)) est une représentation schématique d'un bloc de contrôle de processus PCB conforme à l'invention,
- la figure 12 est une représentation schématique d'un élément de pile conforme à l'invention,
- la figure 13 est une représentation schématique d'un descripteur de procédure PD32 utilisé en Mode 32 et en Mode 32/64,
- la figure 14 est une représentation schématique d'un descripteur de procédure CASD utilisé en cas de changement d'espace d'adressage,
- la figure 15 est une représentation schématique d'un descripteur de procédure PD64 utilisé en Mode 64,
- la figure 16 est une représentation schématique d'un format particulier du registre compteur d'instructions IC utilisé dans l'invention,
- la figure 17 est une représentation schématique du mécanisme de base d'un appel de procédure du type à descripteur de procédure et utilisé dans le cadre de l'invention,
- et les figures 18,19 et 20 sont des représentations schématiques du mécanisme de changement dynamique de mode d'exécution de processus, selon les cas N° 1, 2 et 3 prévus dans l'invention.

Par convention, dans la suite de l'exposé le sigle "**" désignera l'expression mathématique "exposant", par exemple 2**10=1024. De même le sigle "<>" désignera l'expression mathématique "différent de".

Dans le mode de réalisation de l'invention ici décrit à titre d'exemple non limitatif, le système informatique a été conçu pour rester compatible avec des systèmes existants supportant un adressage à 32 bits. Il en résulte que le système selon l'invention incorpore à des degrés divers certains éléments matériels et logiciels des systèmes courants. Pour ne pas surcharger l'exposé qui va suivre, celui-ci sera centré sur la présentation de l'invention proprement dite. Aussi le lecteur pourra se reporter pour plus de détails sur la documentation disponible et tout particulièrement sur le brevet US-A-4 385 352 concernant un dispositif de développement et de calcul d'adresse dans une mémoire segmentée, et sur le brevet US-A-4 297 743 concernant un mécanisme d'appel de procédure et mécanisme de pile coopérant pour ordinateur.

Par ailleurs il paraît opportun de rappeler à ce stade de l'exposé les quelques définitions suivantes :
- Processus : un processus est défini comme une séquence ordonnée d'opérations définies par des instructions qui sont susceptibles d'être exécutées de façon asynchrone par le sous-système central. De ce fait plusieurs processus peuvent être actifs et partager des ressources fournies par le système mais, dans un processeur donné, un seul processus est en cours d'exécution à un instant donné. Un groupe de processus est un ensemble de processus associés nécessaires pour exécuter une étape de travail pour laquelle des ressources spécifiques ont été temporairement attribuées par le système. Chaque processus dispose en mémoire d'une zone appelée bloc contrôle de processus (PCB) dans laquelle peuvent être sauvegardées les informations nécessaires à l'exécution du processus par le système.
- Procédure : une procédure est définie comme un ensemble identifiable d'instructions de programme convenablement liées pour être exécutées dans le cadre d'un processus. Pour passer d'une procédure à une autre ou utiliser les divers services du système d'exploitation (notamment lors de l'exploitation de programmes structurés de façon modulaire), on utilise un mécanisme particulier (détaillé en cours de l'exposé) dénommé appel de procédure. Un des mérites de l'invention est d'avoir conservé à ce mécanisme d'appel (très appréciable pour le degré de performance du système) son efficacité malgré les deux dimensions d'adressage.
- Espace d'adressage : zone de la mémoire attribuée à un processus et accessible par ce dernier. Le plus souvent les adresses utilisées par un processus sont des adresses logiques et non des adresses absolues dans la mémoire principale.
- Segmentation de la mémoire principale : Pour répondre aux besoins de mémoire virtuelle d'un processus, l'espace d'adressage est attribué statiquement lors de la construction du processus ou dynamiquement durant la vie du processus par segments de dimensions variables en général non contigus. Le processus a ainsi accés à ses propres segments de mémoire, ou à des segments associés, par l'intermédiaire d'un système de descripteur de segments les décrivant. Ces descripteurs sont contenus dans des tables gérées par le système d'exploitation. Afin de minimiser la taille des tables en mémoire centrale, on a défini des niveaux de partage de segments codés de (0) à (3). Indépendamment des niveaux de partage, le système peut incorporer un système de degré de privilège entre processus, par exemple un système utilisant le concept d'anneaux décrit dans la demande de brevet US-A-4 177 510.

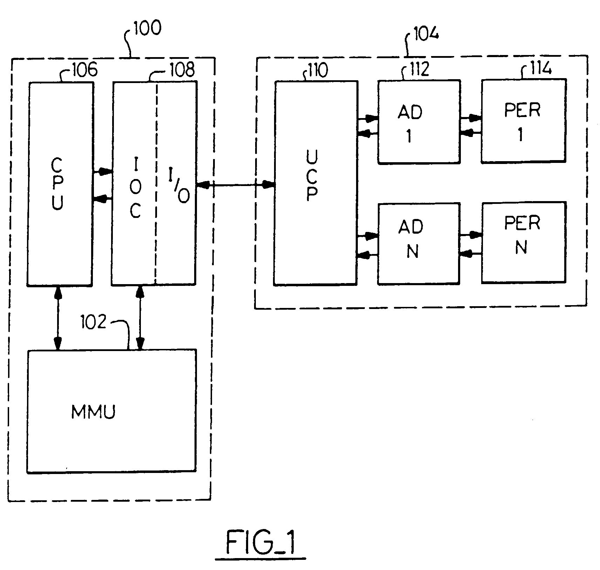

Si l'on considère la figure 1, le système informatique comporte deux sous-ensembles principaux, le sous-système central 100 comportant notamment la mémoire centrale MMU 102, et le sous-système de périphériques 104. Le sous-système central 100 est structuré autour des processeurs centraux CPU 106 reliés à des contrôleurs d'entrée/sortie IOC 108. Ces contrôleurs 108 communiquent par des canaux d'entrée/sortie I/O avec le sous-système de périphériques 104 au travers d'unités de contrôle de périphériques UCP 110, elles-mêmes reliées par des adaptateurs AD 112 aux périphériques PER 114 les plus divers, notamment des mémoires de masse (mémoires à disque), des terminaux actifs à écran et clavier, des imprimantes et des appareils de transmission de données. Le nombre de périphériques peut atteindre plusieurs centaines.

La mémoire centrale MMU 102 est constituée par un réseau de microplaquettes semiconductrices de type mémoire vive dynamique (DRAM) d'une capacité maximale totale de 1024 Gigaoctets (1024 GB). De façon optionnelle, on prévoit dans chaque processeur une antémémoire (non représentée) pour réduire les temps d'accès et de transfert des informations le plus souvent traitées.

### DOMAINE D'ADRESSAGE

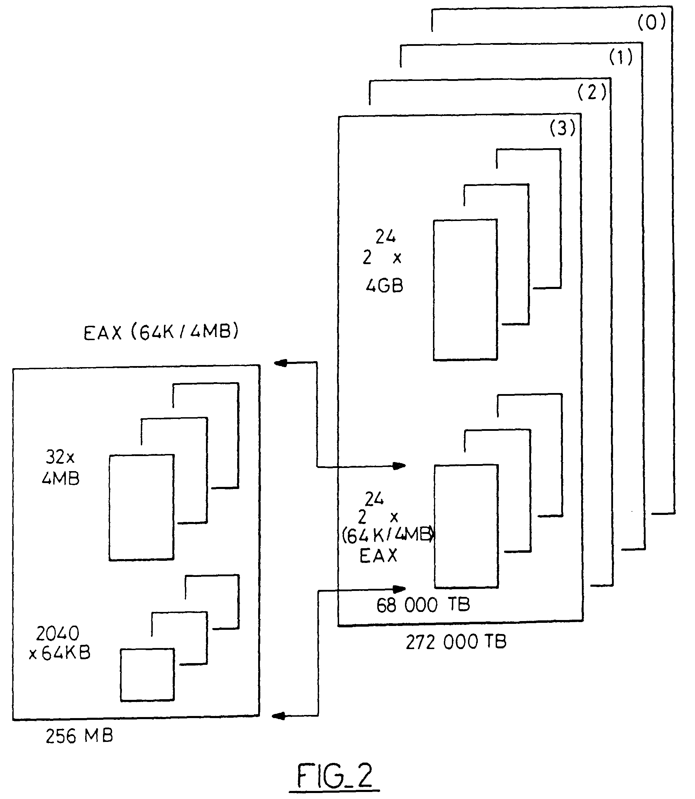

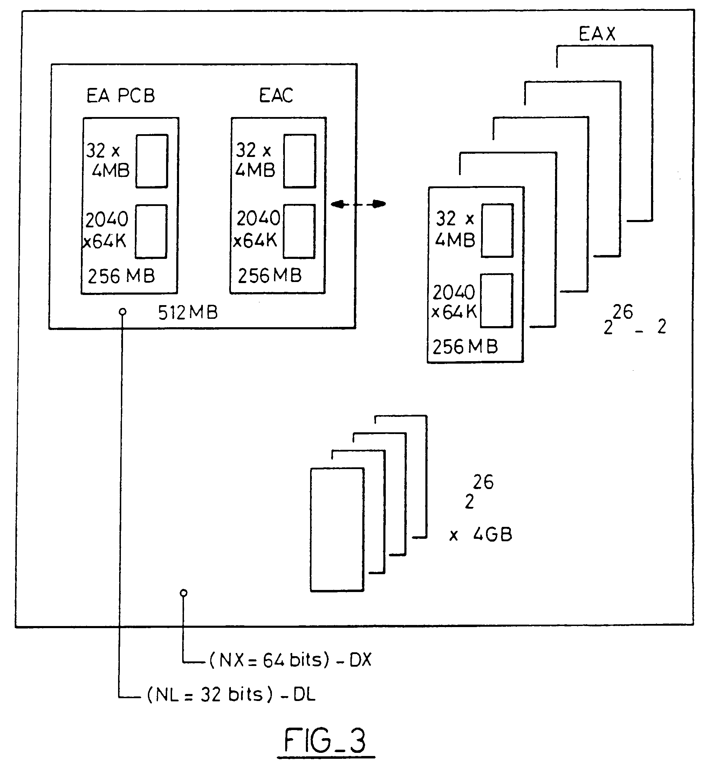

Les figures 2 et 3 illustrent schématiquement l'organisation de la mémoire virtuelle selon l'invention.

La mémoire principale est organisée selon trois types de segments de taille croissante :
- segments de 64 Kilooctets ou 2**16 octets (64 KB)
- segments de 4 Mégaoctets ou 2**22 octets (4 MB)
- segments de 4 Gigaoctets ou 2**32 octets (4 GB).

Les segments des deux premiers types sont regroupés par lots, ci-après appelés espaces d'adressage 64K/4MB ou espaces EAX, d'une capacité totale de 256 Mégaoctets ou 2**28 octets et constitués de :
32 segments type 4 MB et
2040 segments type 64 KB.

Enfin les espaces d'adressage 64K/4MB et les segments du type 4GB sont regroupés entre 4 tranches d'une capacité unitaire de 68.000 Téraoctets (1 Téraoctet égalant 2**40 octets) et constituées de :
2**24 segments de type 4 GB et
2**24 espaces d'adressage 64K/4MB.

Les 4 tranches correspondent aux quatre niveaux de partage des segments, respectivement le niveau (0) ou "système", le niveau (1) ou "indéfini", le niveau (2) ou "groupe de processus" et le niveau (3) ou "processus".

La capacité totale de la mémoire virtuelle ainsi constituée est de 272.000 Téraoctets, (capacité comprise entre 2**58 et 2**59 octets). Bien évidemment le domaine mémoire ainsi constitué DX demande un adressage logique de dimension NX compatible. La dimension NX peut être contenue dans un pointeur de 64 bits. De même les espaces d'adressage EAX de capacité mémoire limitée admettent un adressage logique relatif dont la dimension NL peut être contenue dans un mot de 32 bits.

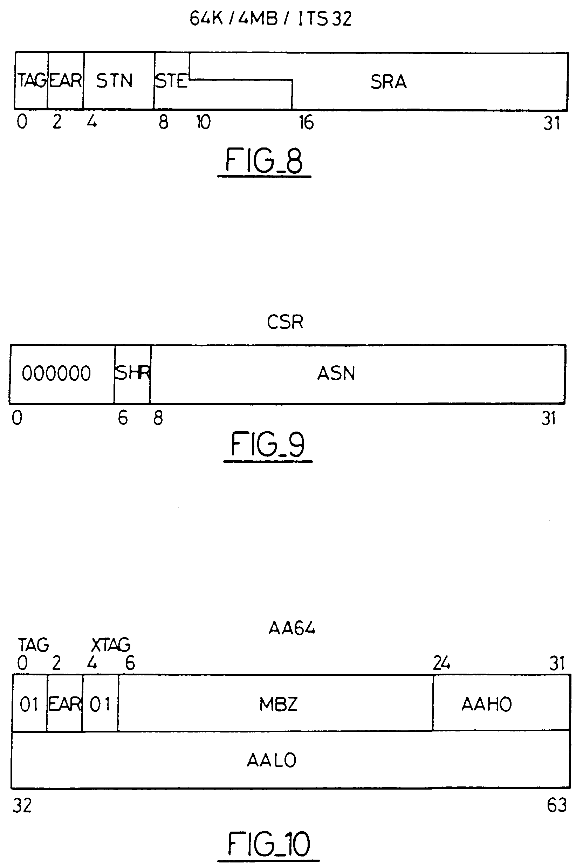

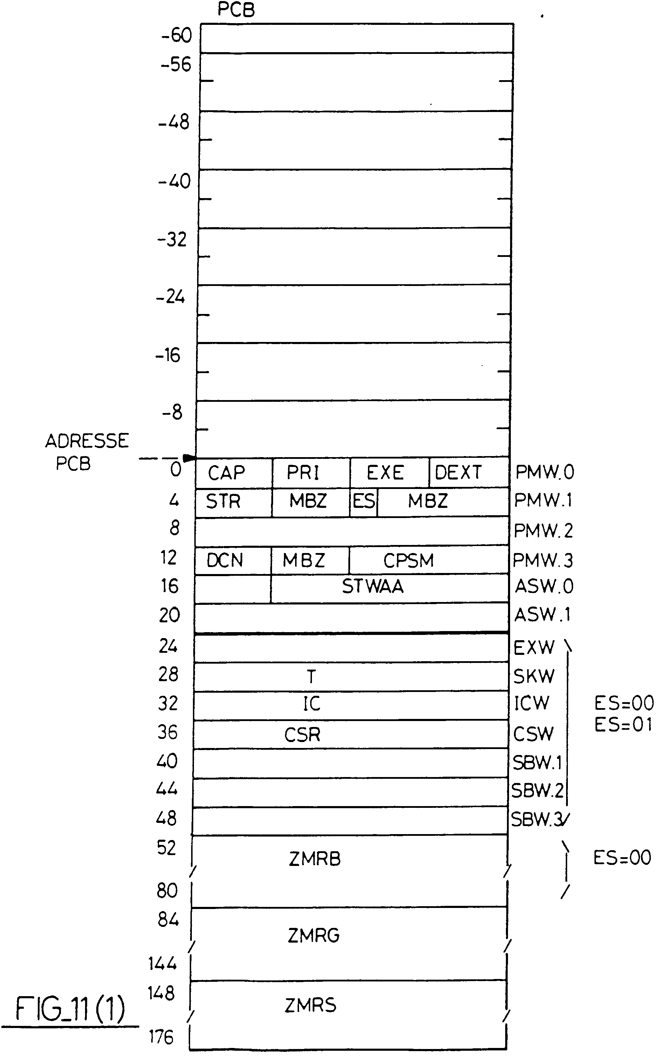

Les espaces EAX sont identifiables par un numéro d'ordre ou d'une façon plus générale par un identificateur plus élaboré; par exemple dans le mode de réalisation de l'invention ici présenté, l'identificateur (illustré à la figure 9) est constitué principalement d'une zone indicative du niveau de partage des segments et d'un numéro d'ordre dans la tranche mémoire correspondante.

Si l'on considère la figure 3, on remarque qu'à l'intérieur du domaine mémoire DX, on a défini un domaine mémoire DL comportant un des espaces d'adressage de type EAX de 64K/4MB affecté de façon temporaire et interchangeable à ce domaine DL qui admet une dimension d'adresse de 32 bits. Cet espace de type EAX affecté au domaine DL est appelé ci-après espace d'adressage courant EAC.

Pour améliorer la compatibilité avec les programmes existants conçus sous adressage de 32 bits, un espace d'adressage permanent appelé espace EAPCB de structure identique à celle des espaces 64K/4MB est affecté au domaine mémoire DL. Dans le domaine DX cet espace EAPCB est repérable par son identificateur de valeur égale à zéro (tous les bits du champ réservé à l'identificateur présentent la valeur binaire zéro). Ainsi donc le domaine mémoire DL supportant un adressage de 32 bits a une capacité de 512 Mégaoctets.

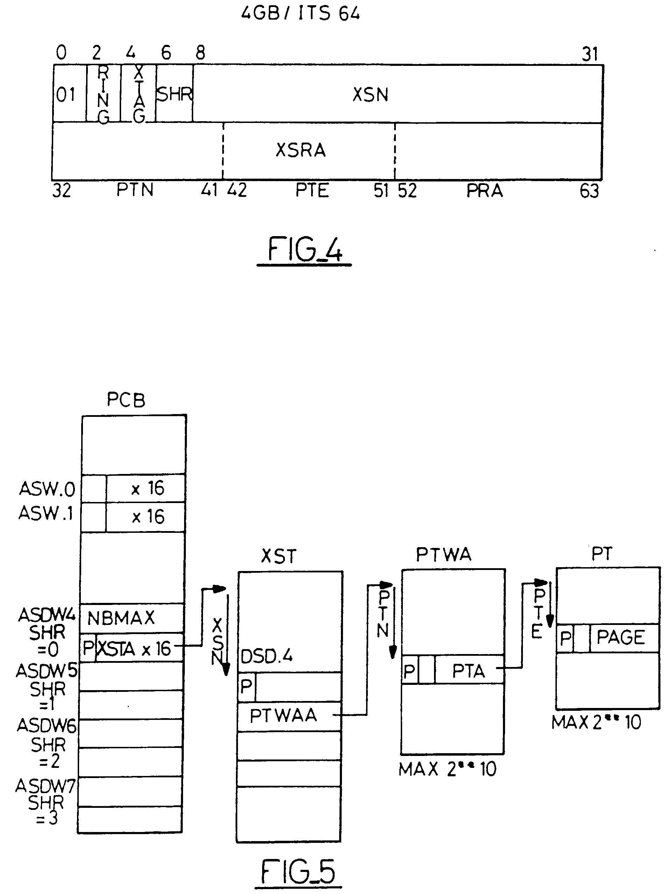

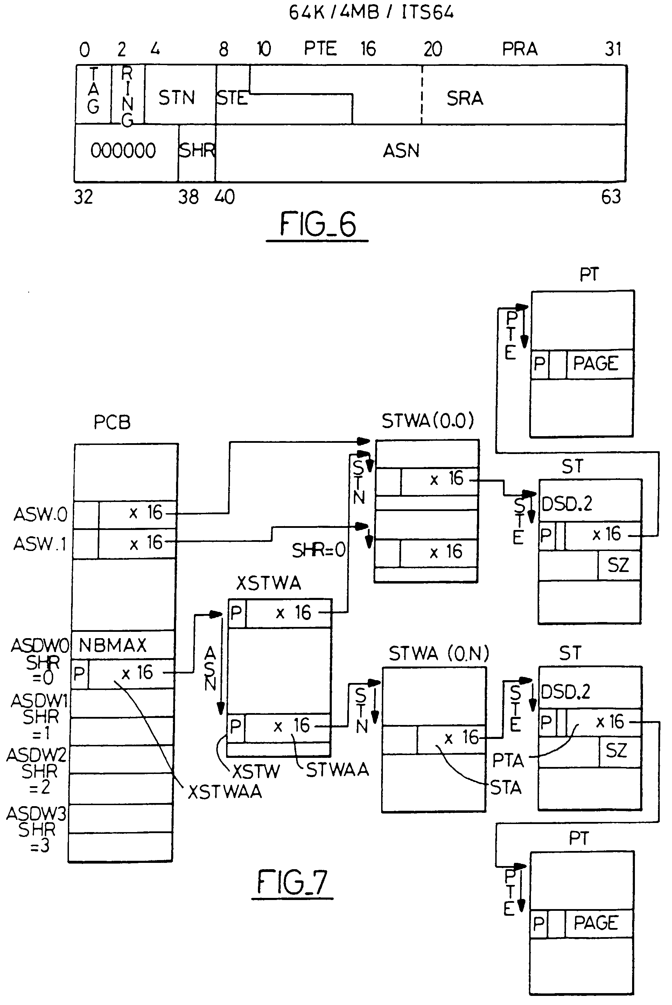

Les figures 4 et 6 présentent les deux types de format des descripteurs de données utilisant l'adressage de 64 bits. D'une façon générale, ces formats sont structurés autour de mots de 32 bits (numérotés de 0 à 31 de gauche à droite) parfois accolés sous forme de mots doubles de 64 bits (les bits du second mot étant alors numérotés de 32 à 63 de gauche à droite). Ces formats sont susceptibles d'être utilisés aussi pour les données et pour les instructions.

En ce qui concerne les données, celles-ci sont sous forme binaire mais sont susceptibles d'être interprétées comme binaires, décimales, flottantes ou alphanumériques. Les bits de données sont interprétés par groupes de quatre lorsque codés en décimal-codé-binaire, par groupes de huit pour des données alphanumériques, par groupes de 64 ou 128 bits pour les données flottantes, et par groupes de 1 à 64 pour des données binaires.

Les emplacements d'octets en mémoire principale sont numérotés de façon consécutive en partant de zéro. Chaque numéro correspond à l'adresse physique de l'octet. Selon l'exemple décrit, un mot est formé de 32 bits, c'est à dire de 4 octets. Aussi, un groupe d'octets peut être aligné sur un demi-mot, un mot, un mot double ou un mot quadruple, si l'adresse de l'octet de gauche du groupe est respectivement un multiple de 2, 4, 8 ou 16. Dans ce cas, un groupe entier d'octets de données peut être extrait en bloc de la mémoire. L'emplacement des données dans la mémoire est obtenue à partir d'un descripteur (d'adresse) de données par un mécanisme de développement d'adresse détaillée ultérieurement.

La figure 4 illustre le format FX2 d'un descripteur de données de 64 bits correspondant aux segments de plus grande taille, soit 4 Gigaoctets. Le descripteur dénommé 4GB/ITS64 comporte deux mots et se décompose comme suit:
- un premier champ formé des deux premiers bits 0 et 1 et dénommé TAG contient la valeur binaire 01,
- un deuxième champ formé des bits 2 et 3 et dénommé RING contient une valeur binaire représentative du niveau de privilège associé au pointeur lors des accès aux données du segment adressé (numéro d'anneau),
- un troisième champ formé des bits 4 et 5 et dénommé XTAG contient une valeur binaire représentative du code-type du descripteur. Plus précisément,
   XTAG = 00 correspond à un adressage direct (le développement d'adresse conduit à l'objet recherché),
   XTAG = 01 correspond à un adressage absolu en mémoire physique et qui est obtenu par une concatenation des champs XSN et XSRA (cette opération sera décrite par la suite en référence à la figure 10),
   XTAG = 10 correspond à un adressage indirect (le développement d'adresse conduit à un autre descripteur de données de 64 bits lui-même conduisant directement ou indirectement à l'objet recherché),
   XTAG = 11 correspond à un défaut conduisant à une procédure spéciale d'exception,
- un quatrième champ formé des bits 6 et 7 et dénommé SHR contient une valeur binaire représentative du niveau de partage, de (0) à (3), du segment adressé, c'est-à-dire de la tranche de mémoire dans laquelle se trouve ce segment,
- un cinquième champ formé des bits 8 à 31 (24 bits) et dénommé XSN contient une valeur binaire représentative du numéro d'ordre du segment adressé dans la tranche mémoire correspondante,
- un sixième champ formé des bits 32 à 63 (2ème mot) et dénommé XSRA contient une valeur binaire représentative du déplacement dans le segment (adresse relative)` de l'objet auquel le processus recherche l'accès.

Le développement d'adresse (illustré à la figure 5) de ce descripteur 4GB/ITS64 est effectué de la façon suivante à partir des données contenues dans des zones spécifiques du bloc mémoire PCB (bloc de contrôle de processus) correspondant au processus recherchant l'accès au segment de type 4GB adressé. A cet effet le bloc PCB illustré en partie à la figure 5 comporte 4 zones d'une longueur d'un mot double (2 mots de 32 bits) dénommées ASDW4 (pour SHR=0), ASDW5 (pour SHR=1), ASDW6 (pour SHR=2) et ASDW7 (pour SHR=3). Les zones ASDW4/7 (double mot d'espace d'adresse) ne sont réellement significatives que dans la mesure où le contenu du champ P (bit 32 ou bit de Présence) est égal à l'unité. Ce champ P indique la présence en mémoire de la structure recherchée, ici une table de descripteurs de segments dénommée XST. Dans le cas où ce bit de présence P égale zéro, une procédure d'exception est initialisée afin de charger en mémoire la liste de descripteur recherchée.

Les zones ASDW4/7 comportent deux autres champs, le premier nommé NBMAX (bits 8 à 31) définit le nombre d'entrées dans la table XST (maximum 2**24) et le second nommé XSTA (bits 33 à 63) est un pointeur qui définit l'adresse absolue en multiple de 16 de la première entrée de la table XST. Cette adresse absolue sera donc obtenue en ajoutant 4 zéros du côté des poids faibles à la valeur de XSTA. D'une façon générale, dans la suite de la description, le terme "entrée" désignera le premier octet d'un élément d'une table, tandis que le terme "pointeur" désignera une valeur représentative de l'adresse absolue d'une telle entrée. Le pointeur sera souvent un sous-multiple de l'adresse absolue.

Le contenu du champ XSN du descripteur 4GB/ITS64 est alors utilisé pour accéder dans la table XST au double descripteur de segment DSD.4 formé d'un mot quadruple. Outre le bit de présence P (bit 0) et les divers champs de protection, ce mot quadruple, correspondant à un double descripteur direct, comporte un pointeur d'adresse PTWAA (bits 32 à 63) donnant en multiple de 16 l'adresse absolue de la première entrée du tableau des mots de tables de pages PTWA, et un champ de dimension du segment (bits 64 à 87) dont la valeur augmentée d'une unité donne en multiple de 4096 octets la dimension du segment.

Le contenu du champ XSRA du descripteur 4 GB/ITS64 est alors utilisé pour partie. En fait le champ XSRA est divisé en trois zones (voir figure 4), un sous-champ PTN (bits 32 à 41) correspondant au numéro de table de page PT, un sous-champ PTE (bits 42 à 51) correspondant au numéro d'entrée dans la table de pages du segment correspondant, et un sous-champ PRA (bits 52 à 63) correspondant à l'adresse relative de la structure recherchée dans la page dont la dimension est de 4 Kiloctets soit 2**12 octets.

Ainsi donc, le contenu du sous-champ PTN donne le numéro d'ordre de l'entrée dans le tableau des mots de tables de page PTWA (taille maximum MAX=2**10 entrées) et permet d'accéder au mot (32 bits) de table de pages recherché. Ce dernier comporte outre le bit de présence P, l'adresse absolue PTA de la première entrée de la table de page PT recherchée (taille maximum MAX=2**10 entrées). Le contenu du sous-champ PTE donne le numéro d'ordre de l'entrée recherchée dans la table de page PT et permet d'accéder au descripteur de page et qui comporte outre le bit de présence P, l'adresse absolue du premier octet de la page.

Ce mécanisme qui traduit une adresse virtuelle (aussi appelée adresse segmentée) en adresse réelle est généralement associé à un dispositif d'accélération utilisant une mémoire associative permettant de faire correspondre directement les adresses réelles aux adresses virtuelles lors d'utilisations ultérieures de ces adresses.

La figure 6 illustre le format FX1 d'un autre descripteur de données de 64 bits correspondant aux segments incorporés dans les espaces d'adressage 64K/4MB. Ce descripteur dénommé 64K/4MB/ITS64 comporte deux mots et se décompose comme suit :
- le premier champ appelé TAG formé des bits 0 et 1 contient une valeur binaire représentative du code-type du descripteur. Plus particulièrement,
   TAG = 00 correspond à un adressage direct,
   TAG = 01 renvoie à un descripteur de type 4GB/ITS64,
   TAG = 10 correspond à un adressage indirect,
   TAG = 11 correspond à un défaut conduisant à une procédure spéciale d'exception.
- le deuxième champ formé des bits 2 et 3, et dénommé RING contient une valeur binaire représentative du niveau de privilège associé au pointeur lors des accès aux données du segment adressé (numéro d'anneau),
- le troisième champ formé des bits 4 à 8 (4 bits) dénommé STN contient une valeur binaire représentative du numéro d'ordre d'une entrée dans le tableau des mots de tables de segments STWA,
- les quatrième et cinquième champs dénommés STE et SRA représentatifs du numéro d'une entrée dans la table des segments ST et de l'adresse relative de l'objet recherché dans le segment considéré, présentent deux formats différents selon le type de segment adressé. L'adressage à un segment de type 4MB (STE est défini par les bits 8 et 9 et SRA par les bits 10 à 31) correspond à une valeur décimale de STN comprise entre 0 et 7. L'adressage à un segment de type 64KB (STE est défini par les bits 8 à 15 et SRA par les bits 16 à 31) correspond à une valeur décimale de STN comprise entre 8 et 15.

Comme précédemment le champ SRA comporte deux sous-champs, le sous-champ PTE correspondant au numéro d'ordre de l'entrée dans la table des pages (longueur 10 ou 4 bits selon le type de segment) et le sous-champ PRA (bits 20 à 31) correspondant à l'adresse relative dans la page de l'objet recherché.

Le second mot du descripteur 64K/4MB/ITS64 comporte les sixième, septième et huitième champs :
- le sixième champ (bits 32 à 37) contient la valeur binaire zéro,
- le septième champ (bits 38 à 39) appelé SHR contient une valeur binaire représentative du niveau de partage du segment adressé,
- et le huitième champ (bits 40 à 63) appelé ASN contient le numéro d'ordre permettant l'identification de l'espace d'adressage EAX correspondant.

Le développement d'adresse (illustré à la figure 7) de ce descripteur 64K/4MB/ITS64 est effectué de la façon suivante à partir des données contenues dans des zones spécifiques du bloc mémoire PCB correspondant. A cet effet le bloc PCB (illustré en partie à la figure 7) comporte 4 zones d'une longueur d'un mot double dénommées ASDW0 (pour SHR=0), ASDW1 (pour SHR=1), ASDW2 (pour SHR=2) et ASDW3 (pour SHR=3). Comme précédemment les doubles mots d'espace d'adresse ASDW0/3 ne sont réellement significatifs que dans la mesure où le contenu du bit de présence P (bit 32) est égal à 1. Les zones ASDW0/3 comportent deux autres champs, le premier nommé NBMAX (bits 8 à 31) définit le nombre d'entrées, dans le tableau principal des mots de tables de segments XSTWA (maximum 2**24) et le second nommé XSTWAA (bits 33 à 63) est un pointeur qui définit l'adresse absolue en multiple de 16 de la première entrée du tableau XSTWA.

Le contenu du champ ASN du descripteur 64K/4MB/ITS64 est alors utilisé pour accéder au mot XSTW correspondant qui comporte, outre le bit de présence P, le champ STWAA (pointeur) représentatif de l'adresse absolue de la première entrée d'un tableau de mots de tables de segments STWA. Le champ STN du descripteur 64K/4MB/ITS64 permet alors d'accéder au mot contenant le champ STA (pointeur) qui définit l'adresse absolue en multiple de 16 de la première entrée de la table de segment ST.

Le contenu du champ STE du descripteur 64K/4MB/ITS64 est alors utilisé pour accéder dans la table ST au double descripteur de segment DSD.2 formé d'un mot double. Outre le bit de présence P (bit 0) et les divers champs de protection, le mot double correspondant à un descripteur direct comporte un pointeur d'adresse PTA (bits 8 à 31) donnant en multiple de 16 l'adresse absolue de la première entrée de la table de pages correspondante PT et un champ de dimension SZ (bits 46 à 55) dont la valeur augmentée d'une unité donne en multiple de 4096 octets la dimension du segment. Le contenu du sous-champ PTE permet d'accéder dans la table PT au descripteur de page correspondant à la page recherchée et qui comporte outre le bit de présence P le pointeur PAGE de l'adresse absolue du premier octet de la page recherchée.

La figure 7 montre également sous la dénomination STWA(0.0), le tableau des mots de tables de segments correspondant à SHR=0 et ASN=0. L'accés à ce tableau particulier qui correspond à l'espace d'adressage permanent EAPCB peut être réalisé directement avec gain de temps appréciable à partir d'une zone particulière du bloc PCB, dénommée mot d'espace-adresse ou ASW.0, de dimension égale à un mot et qui comporte le pointeur de l'adresse absolue de la première entrée du tableau STWA(0.0). Cette faculté est très intéressante au niveau de la compatibilité du système selon l'invention par rapport aux programmes déjà existants structurés sur des adresses de 32 bits selon le format FL donné à la figure 8. Il est ainsi possible de partager des données dans les deux domaines d'adressage à 32 bits (DL) et à 64 bits (DX).

Compte tenu de l'identité des structures utilisées dans le domaine DL à adressage 32 bits (espace EAPCB et espace EAC) avec les structures des espaces d'adressage EAX composés des lots de segments de types 64KB et 4MB, le format du descripteur de données en adressage de 32 bits dénommé 64K/4MB/ITS32 illustré à la figure 8 présente une structure identique à celui du premier mot du descripteur 64K/4MB/ITS64 illustré à la figure 6, étant entendu que les champs RING et EAR sont équivalents. Une adresse dans l'espace EAPCB est obtenue par TAG=00. Par contre TAG=01 conduit à une adresse dans l'espace d'adressage courant EAC identifiable parmi les espaces EAX. A cet effet un registre spécial CSR a été créé pour mémoriser la valeur de l'identificateur de l'espace EAC, c'est à dire de l'identificateur de celui des espaces EAX qui est alors affecté temporairement au domaine DL. Ce registre CSR dont le format est illustré à la figure 9 a pour dimension un mot et est identique à celui du deuxième mot du descripteur 64K/4MB/ITS64. Il se compose de trois champs, le premier formé des bits 0 à 5 contenant chacun la valeur binaire 0, le second SHR, formé des bits 6 et 7, contient une valeur représentative du niveau de partage du segment adressé, et le troisième ASN formé des bits 8 à 31 contient l'identification (en fait le numéro d'ordre dans la tranche mémoire correspondante) du lot de segments formant l'espace d'adressage EAX considéré.

La figure 10 illustre le format d'un descripteur de 64 bits AA64 permettant l'adressage absolu en mémoire physique. Ce format est dérivé du descripteur 4GB/ITS64 illustré à la figure 4 correspondant aux segments de type 4GB et dans lequel le champ XTAG=01. Le champ MBZ formé des bits 6 à 24 (incorporant le champ SHR non significatif dans ce cas) est mis à une valeur égale à zéro. Les huit premiers bits de poids fort de l'adresse absolue sont rangés dans le champ formé par les bits 24 à 31 tandis que les bits de poids faible de la même adresse absolue sont rangés dans le champ formé par le deuxième mot du descripteur soit les bits 32 à 63. Il en résulte que la capacité d'adressage absolu est de 2**40 octets soit 1024 Gigaoctets.

L'adressage absolu à partir d'un descripteur de 32 bits n'est pas possible directement. Il est nécessaire au préalable d'effectuer une opération de changement de format pour passer à un format à 64 bits, opération qui sera décrite ultérieurement.

### MODES D'EXECUTION DES PROCESSUS

Les différentes versions d'adressage mémoire qui ont été présentées sont utilisées pleinement dans les trois modes d'exécution de processus mis en place dans le système informatique dans le cadre de l'invention:
- Le premier mode dit "Mode 32" utilise l'adressage 32 bits.
- Le second mode dit "Mode 64" utilise l'adressage 64 bits.
- Le troisième mode dit "Mode 32/64" utilise le double adressage pour certains segments et dans des conditions particulières détaillées ultérieurement.

Le premier mode est dérivé de ce qui est utilisé par le demandeur dans son système dit "DPS7". En particulier le bloc de contrôle de processus PCB correspondant directement à ce Mode 32 présente sensiblement le même format que celui décrit dans le brevet US-A-4 297 743. On peut rappeler que le bloc PCB comporte les zones mémoire correspondantes aux 8 registres de base (32 bits par registre), 16 registres généraux (32 bits par registre), 4 registres de calcul scientifique (64 bits par registre), une zone de mémorisation ou sauvegarde du registre IC (compteur d'instructions) (32 bits), une zone de mémorisation du registre T (sommet de pile) (32 bits), une zone de mémorisation du registre STR (registre de statut) (8 bits). Toutefois l'adressage absolu n'est plus autorisé sur 32 bits mais peut être obtenu après changement de mode du processus vers les Modes 64 ou 32/64. En effet le code-type TAG=01 est utilisé pour les développements d'adresse virtuelle en Mode 32/64.

Ainsi le premier mode d'exécution dit Mode 32 est capable de gérer des descripteurs ITS32, directs (TAG=00), indirects (TAG=10) et défaut (TAG=11), pour accéder aux seuls segments de l'espace EAPCB. De plus le processus a la possibilité de générer en mémoire de nouveaux pointeurs pour les autres modes et de transférer des données à partir ou vers les autres segments de la mémoire virtuelle à l'aide d'une instruction particulière dénommée XMOVE.

Le mode d'exécution de processus dit Mode 64 est l'équivalent du Mode 32 mais adapté au nouveau domaine mémoire DX et à son adressage de 64 bits. La liste des instructions est voisine de celle correspondant au Mode 32 mais complétée de nouvelles instructions concernant :
- le test d'activation du nouvel environnement 64 bits,
- le test du mode d'exploitation courant,
- l'opération XMOVE,
- les instructions correspondant aux nouveaux descripteurs de page et de segments et à la gestion de tables d'allocations de mémoire.

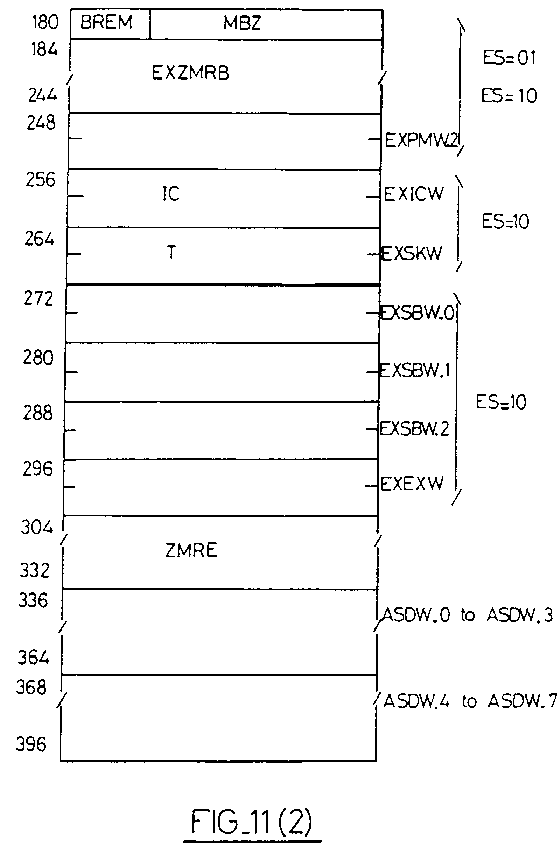

Pour permettre l'exécution en Mode 64, le bloc de contrôle de processus PCB présente un nouveau format illustré figure 11 (figures 11(1) et 11(2)) et décrit rapidement ci-après.

Par rapport à l'adresse de l'octet d'entrée au bloc PCB (octet de référence zéro), le bloc comporte des zones de mémoire réservées aux mesures des temps d'exécution du processus (adresses -60 à 0); les zones occupant les octets -60 à -17 étant optionnelles. On notera que les nombres placés à côté des emplacements de mémoire spécifient le déplacement en octets par rapport à l'emplacement de référence zéro du bloc de contrôle PCB. A partir de l'octet 0 jusqu'à l'octet 15 compris, quatre mots principaux de processus PMW.0 à PMW.3 sont mis en mémoire. Le mot PMW.0 occupe les octets 0 à 3 et présente quatre champs d'un octet chacun, un champ de capacité CAP, un champ de priorité PRI, un champ d'état d'exécution du processus EXE (par exemple "en attente", "prêt", etc.) et un champ d'exécution DEXT. Les détails concernant le contenu des quatre champs du mot PMW.0 sont donnés dans le brevet US 4.297.743.

Le mot principal de processus PMW.1 est mis en mémoire dans les octets 4 à 7. L'octet d'état STR permet la mise en mémoire du registre d'état STR du système. L'octet suivant (codé MBZ) est mis à zéro. Le champ suivant ES de deux bits indique le mode d'exécution du processus selon la valeur de son contenu :
- ES = 00: Mode 32
- ES = 01: Mode 32/64
- ES = 10: Mode 64
- ES = 11: PCB illégal

Le contenu du champ ES est susceptible d'être modifié par le logiciel avant l'exécution d'une instruction de démarrage de processus (START), permettant ainsi de changer le mode d'exécution du processus, ou à l'aide d'instructions spécialisées.

Le mot principal de processus PMW.2 est utilisé pour communiquer des informations complémentaires relatives à l'état du processus, tandis que le mot PMW.3 comporte deux champs significatifs, le champ DCN (bits 0 à 7) concernant les droits du processus à exécuter certaines instructions spécifiques et le champ CPSM (bits 16 à 31) concernant un masque des processeurs autorisé à exécuter le processus.

Le bloc PCB comporte ensuite les deux mots d'espace-adresse ASW.0/1 déjà présentés (fournissant l'adresse des tableaux décrivant les tables de segments STWA), puis un sous-bloc constitué des octets 24 à 51, significatif pour ES=00 ou 01 et constitué du mot d'exception EXW, du mot de pile SKW mémorisant le contenu du registre T de sommet de pile utilisé pour les appels de procédure, du mot ICW mémorisant le contenu du compteur d'instruction IC utilisé pour connaître l'adresse de l'instruction à exécuter, du mot CSW mémorisant le contenu du registre CSR utilisé pour connaître le numéro d'ordre ou l'identification de l'espace d'adressage courant EAC et pour terminer les trois mots de base de pile SBW.1 à SBW.3. Ces mots comportent les adresses segmentées respectives des premiers octets des segments de pile pour les anneaux (0), (1) et (2).

Les octets 52 à 83 correspondent à 8 mots d'une zone de mémorisation des registres de base ZMRB (non significatifs en mode ES=01 et ES=10). Ces registres de base présentent un format sur 32 bits analogue à celui décrit pour les descripteur ITS32 en référence à la figure 8.

Les octets 84 à 147 correspondent à 16 mots d'une zone de mémorisation des registres généraux ZMRG tandis que les octets 148 à 179 correspondent à 8 mots d'une zone de mémorisation des registres scientifiques ZMRS.

Les octets 180 à 255 correspondent à un sous-bloc non significatif lorsque ES=00; le premier mot de ce sous-bloc comporte un premier champ BREM d'un octet utilisé pour la mémorisation du contenu d'un registre BREM (masque des registres de base étendus) utilisable en Mode 32/64, soit ES=01, et un second champ mis à zéro MBZ. Les octets 184 à 247 correspondent à la zone de mémorisation des registres de base étendus EXZMRB (8 doubles mots). Ces registres de base présentent des formats sur 64 bits analogues aux formats décrits pour les descripteurs ITS64 (TAG=01 et TAG<>01) en référence aux figures 4,6, et 10. Les octets 248 à 255 correspondent à un double mot principal de processus EXPMW.2. Les octets 256 à 303 ne sont significatifs qu'en Mode 64 (ES=10) et comportent un mot double EXICW mémorisant le contenu du compteur d'instruction étendu, un mot double EXSKW mémorisant le contenu du registre T étendu de sommet de pile, les trois mots doubles EXSCW.0 à EXSBW.2 et le mot double EXEXW.

Enfin le bloc PCB selon le nouveau format présente une zone de 8 mots de mémorisation de rapport d'exception ZMRE (octets 304 à 352), une zone (octets 336 à 367) de quatre doubles mots d'espace d'adressage ASDW.0 à ASDW.3 (voir figure 7) pour les segments de types 64K/4MB et une zone (octets 368 à 399) de quatre doubles mots d'espace d'adressage ASDW.4 à ASDW.7 pour les segments de type 4GB.

Le mode d'exécution de processus dit Mode 32/64 a été conçu pour une meilleure utilisation des segments de type 64K/4MB et pour permettre des ponts entre les deux domaines mémoire DL et DX, en particulier permettre la migration vers un adressage à 64 bits.

Le Mode 32/64 utilise le contenu du registre BREM qui permet de mémoriser sur un octet la longueur des huit descripteurs ITS contenus dans les registres de base (1 bit BREMi par registre de base BRi, avec i compris entre 0 et 7). La valeur "0" du contenu du bit BREMi indique que le registre de base BRi correspondant contient un descripteur ITS d'un format de 32 bits tandis que la valeur "1" du bit BREMi indique que ce même registre de base BRi contient un descripteur ITS d'un format de 64 bits.

Les instructions de rangement et de chargement du registre de base utilisent le contenu de registre BREM pour décider des conversions éventuelles (32->64) ou (64->32). Plus précisément, si BREMi=1, le registre de base BRi comporte une adresse virtuelle de 64 bits et le développement d'adresse est fait à partir du contenu des champs SHR, ASN, STN, STE et SRA. A l'inverse, si BREMi=0 le registre de base BRi comporte une adresse virtuelle de 32 bits. Si le code TAG contenu dans le registre BRi est différent de 01, alors le développement d'adresse est effectué sur 32 bits; dans le cas contraire (TAG de BRi =01), une extension dynamique de format d'adresse est réalisée en tenant compte du contenu des champs SHR et ASN du registre d'espace courant CSR (le champ TAG du nouveau descripteur ITS 64 bits ainsi obtenu est automatiquement mis à 00).

Par ailleurs certains développements d'adresse sont effectués à partir du contenu de registres de base BR présentant un code TAG=10. Deux cas sont possibles:
- un code TAG=10 dans un registre de base BRi dont le BREMi=0 (adresse de 32 bits) correspond à un descripteur de données ITS32 de TAG=00,
- un code TAG=10 dans un descripteur de données ITS accédé en mémoire et associé à un BREMi=0 doit être suffixé par le contenu du registre CSR lorsque le contenu du registre de base d'origine qui a servi au développement d'adresse présente un code TAG=01.

Enfin, lorsque le code TAG d'un descripteur de données ITS déplacé en mémoire à partir d'un registre dont le BREMi=0 (adresse 32 bits) est différent de 10 (ou 11), alors ce descripteur est suffixé par le contenu du registre CSR si son code TAG=01.

Ainsi donc un processus exécuté selon le Mode 32/64 est susceptible de traiter des adresses de 32 et de 64 bits. Pour permettre ces changements de formats d'adresse et de passer d'un environnement 32 bits à un environnement 64 bits, deux instructions particulières ont été créées :
- l'instruction XLBD charge deux mots (8 octets) de l'adresse X dans le registre de base BRi et place la valeur 1 dans le BREMi,
- l'instruction XSTB range le contenu du registre de base BRi dans deux mots (8 octets) à partir de l'adresse X après une extension du format de 32 à 64 bits si BREMi=0 et si le code TAG=01.

### MECANISMES D'APPEL DE PROCEDURE

D'une façon générale, les systèmes informatiques font une large utilisation des opérations dites d'appel de procédure par lesquelles un processus exécutant une procédure est en mesure d'appeler une autre procédure APE pour exécution, puis par retour à la procédure initiale APT de reprendre sa propre exécution. Ce concept d'appel de procédure est très avantageux pour l'exploitation de programmes modulaires. Le demandeur a décrit dans le brevet US 4 297 743 un procédé et un dispositif utilisant une structure mémoire de pile bien adaptée à ce type d'opération d'appel de procédure.

Une pile est un segment de mémoire particulier constitué par des éléments contigus dont l'accés est réalisé par le système LIFO (dernier entré, premier sorti). Un élément de pile est créé à chaque appel de procédure et est utilisé pour mémoriser les informations permettant le retour vers le processus appelant. On obtient ainsi dans la pile un état récapitulatif des appels.

Dans le système d'exploitation, l'emplacement de l'élément de pile actif est conservé dans le registre de base BR0, tandis que l'emplacement suivant disponible est conservé dans un registre spécial T, ou registre de sommet de pile. Par ailleurs la transmission de certains paramètres est effectuée par un registre de base choisi par le programmeur.

Un appel de procédure débute par l'exécution d'une instruction PRSK (préparation de la pile) qui a pour effet de sauvegarder dans la pile le contenu du registre STR et de fournir à l'utilisateur-programmeur le pointeur d'une zone susceptible de recevoir les paramètres et dans laquelle seront chargées les informations à transmettre à la procédure appelée. L'appel de la procédure est alors complété par l'exécution de l'instruction ENT (entrée de la procédure) selon les étapes suivantes :
- contrôle d'anneau (en cas de nécessité de changement d'anneau, une sous-procédure de "porte" est alors exécutée),
- sauvegarde du contenu registre du compteur d'instructions IC,
- chargement du registre de base BR0 (pointage vers les paramètres),
- détermination du point d'entrée de la procédure par un descripteur de procédure dont l'adresse est donnée dans l'instruction ENT,
- chargement d'un pointeur désignant les données de liaison dans un registre de base déterminé, par exemple le registre BR7,
- entrée dans la nouvelle procédure par le chargement du nouveau numéro d'anneau le cas échéant et l'adresse du point d'entrée dans le registre du compteur d'instructions IC.

Une zone de l'élément de pile en cours, dite zone de travail ZT, est également à la disposition de la procédure appelée par la mise en mémoire de variables locales. Le retour est effectué par l'instruction EXIT (sortie de procédure), à partir du contenu des zones de mémorisation de la pile concernant les registres et le compteur d'instructions IC.

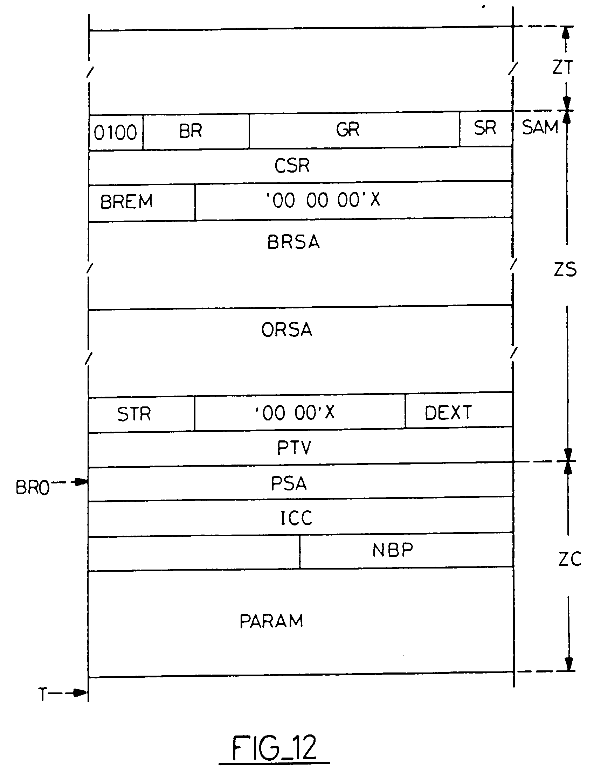

Pour des raisons de sécurité, il est prévu une structure de pile par numéro d'anneau. Pour chaque pile le format particulier d'un élément dépendra du mode d'exécution du processus appelant. La figure 12 illustre schématiquement le format d'un élément de pile utilisé dans le Mode 32/64.

Si l'on considère la figure 12, l'élément de pile selon le Mode 32/64 est constitué sur une largeur de 32 bits de trois zones principales : la zone de travail ZT, la zone de sauvegarde ou de mémorisation d'information ZS (avant l'appel de la nouvelle procédure) et la zone de communication ZC (dans laquelle sont rangées les informations nécessaires pour l'exécution de la procédure appelée). Ces trois zones sont créées par l'instruction PRSK, le premier octet de la zone ZC est désigné par le registre de base BR0.

Le premier mot de la zone ZS est constitué par le masque de zone de sauvegarde ou SAM, se présentant comme il suit:
- un champ "format" de 4 bits, dans le cas présent, de contenu 0100,
- une zone BR de 8 bits constituant un masque de désignation pour les 8 registres de base BR0 à BR7 (en vue de leur mise en mémoire),
- une zone GR de 16 bits, constituant un masque de désignation pour les 16 registres généraux GR0 à GR15,
- et une zone SR de 4 bits constituant un masque de désignation pour 4 registres scientifiques SR0 à SR3.

Le second mot est réservé à la sauvegarde du registre CSR tandis que le troisième mot est réservé à la sauvegarde du registre BREM. Vient ensuite la zone de sauvegarde des registres de base BRSA (2 mots par registre, avec une mise à zéro du deuxième mot lorsque BREMi=0), puis la zone de sauvegarde ORSA des autres registres. L'avant dernier mot est utilisé pour la sauvegarde du registre d'état STR (1er octet) et le numéro éventuel de l'extension mémoire partielle dans lequel la procédure en cours du processus appelant opérait. Enfin, le dernier mot PTV de la zone de sauvegarde ZS contient la valeur précédente du registre T, soit la valeur du registre T au commencement de l'instruction PRSK.

La zone de communication ZC dont l'entrée est donnée par le pointeur contenu dans le registre de base BR0 débute par le mot PSA qui contient le pointeur du mot SAM. Vient ensuite le mot ICC qui contient l'adresse de l'instruction suivant l'instruction ENT. Par ailleurs le contenu du champ NBP (nombre d'octets de la zone des paramètres) de l'instruction PRSK est rangé dans le champ NBP de l'élément de pile. La zone de communication se termine par la zone des paramètres PARAM dont la fin est bordée par l'octet de sommet de pile T. Le registre T est mis à jour après chaque création d'élément de pile.

En cas d'exécution en Mode 32, le format de pile est voisin de celui précédemment décrit en référence à la figure 12, avec les modifications suivantes :
- le contenu du champ "format" du mot SAM est mis à 0000,
- les mots CSR et BREM sont éliminés,
- la sauvegarde du contenu des registres de base est effectuée sur un seul mot au lieu de deux.

En cas d'exécution en Mode 64, le format de pile est voisin de celui précédemment décrit à propos du Mode 32/64 en référence à la figure 12, avec les modifications suivantes :
- le contenu du champ "format" du mot SAM est mis à 1000,
- les mots CSR et BREM sont éliminés,
- les zones de sauvegarde des registres de base, les zones PTV, PSA et ICC ont pour dimension un mot double. Ainsi donc l'adresse du premier octet de la zone PARAM est obtenu par un déplacement de 20 octets, à partir de l'adresse pointée par le contenu du registre BR0.

L'accès aux diverses procédures mises en oeuvre dans le cadre des mécanismes d'appel est réalisé par l'intermédiaire de descripteurs d'adresse de procédure appelés descripteurs de procédure PD. Bien entendu, les formats des descripteurs de procédure dépendent du mode d'exécution du processus.

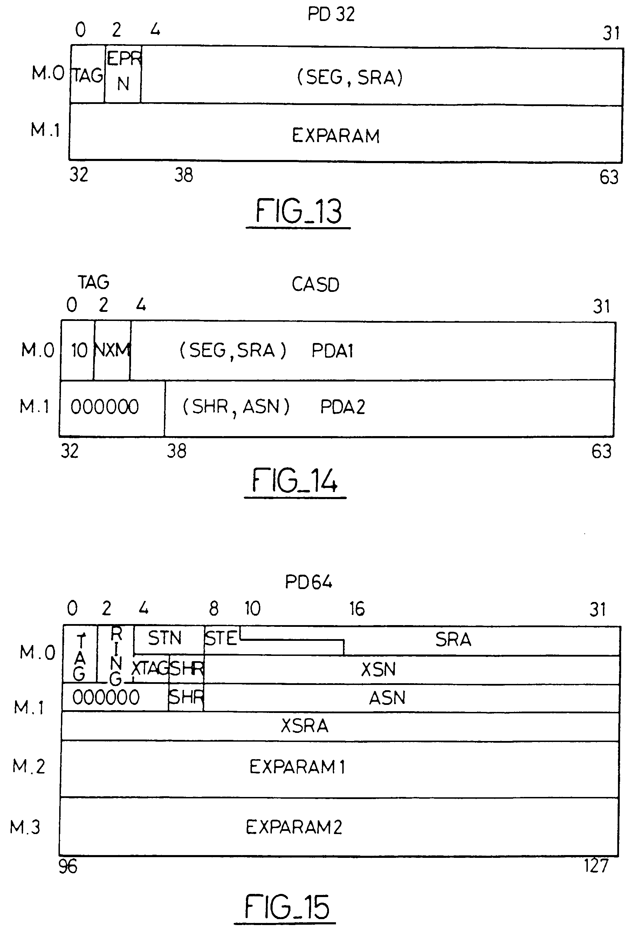

Si l'exécution est réalisée en Mode 32 ou en Mode 32/64, le format du descripteur de procédure, dénommé PD32, est conforme à celui illustré à la figure 13. Le premier mot M.0 comporte le champ TAG (bits 0 et 1), le champ EPRN (bits 3 et 4) équivalent au champ RING (numéro d'anneau) et au champ d'adresse segmentée (SEG, SRA) de la procédure appelée (bits 4 à 31) dans les cas où TAG<>0. Le champ SEG permet d'identifier un numéro de segment et a la même signification que l'ensemble des champs STN et STE des descripteurs des figures 6 et 8. De même le champ SRA définit le déplacement dans le segment défini par SEG. De façon optionnelle, un deuxième mot de 32 bits M.1 contient les paramètres d'extension EXPARAM. Plus précisemment:
- pour TAG=00 (descripteur direct), le descripteur de procédure est limité à un mot et l'adresse segmentée correspond à celle du point d'entrée de la procédure;
- pour TAG=01 (descripteur étendu), le descripteur comporte deux mots; l'adresse segmentée correspond à celle du point d'entrée de la procédure; par ailleurs le contenu du deuxième mot est chargé dans le registre de base BR7 lors de l'entrée de la procédure;
- pour TAG=10 (descripteur CASD), le descripteur dénommé descripteur de changement d'espace d'adressage CASD présente le format illustré à la figure 14.

Le premier mot M.0 du descripteur CASD comporte outre le champ TAG fixé à 10, un champ NXM (bits 2 et 3) définissant le mode d'exécution de la procédure appelée et le champ PDA1 (SEG, SRA) (bits 4 à 31) de l'adresse segmentée du descripteur de la procédure appelée. Le deuxième mot M.1 comporte une zone de 6 bits mis à zéro et un champ additionnel PDA2 (SHR, ASN) (bits 38 à 63) de l'adresse segmentée du descripteur de procédure appelée.

Si l'exécution est réalisée en Mode 64, le format du descripteur de procédure, dénommé PD64, est conforme à celui illustré à la figure 15. Le format présente au minimum deux mots (M.0 et M.1), et de façon optionnelle deux mots d'extension (M.2 et M.3). La structure des mots M.0 et M.1 est semblable à celle déjà décrite pour les descripteurs de données ITS64 en adressage 64 bits. De plus les mots M.2 et M.3 comportent des paramètres d'extension EXPARAM1/2.
- Pour TAG=00 ou (TAG=01 et XTAG=00) (descripteur direct) la dimension du descripteur est de deux mots et l'adresse segmentée est celle du point d'entrée de la procédure.
- Pour TAG=10 ou (TAG=01 et XTAG=10) (descripteur étendu) , la dimension du descripteur est de quatre mots, l'adresse segmentée est celle du point d'entrée de la procédure et le contenu des mots M.2 et M.3 est chargé dans le registre de base BR7.
- Pour TAG=11 ou (TAG=01 et XTAG<>(00 ou 10), il se produit un branchement vers des procédures d'exception prévues par le système.

D'une façon générale, un descripteur de procédure incorporé dans un segment non protégé est susceptible d'être placé dans tout segment compatible avec l'adressage utilisé et le mode d'exécution du procédé :
- en Mode 32, le descripteur de procédure est placé dans un segment de l'espace 64K/4MB accessible par SHR et ASN égaux à zéro. Il peut également être placé dans tout segment des espaces 64K/4MB (EAX), s'il est référencé par l'intermédiaire d'un descripteur CASD lui même localisé dans un segment de l'espace 64K/4MB accessible par SHR et ASN égaux à zéro.
- en Mode 64, le descripteur de procédure peut être placé dans tout type de segment, pour autant que le processus soit autorisé à accéder à ce segment,
- en Mode 32/64, le descripteur de procédure peut être placé dans tout segment du type 64K/4MB ou 4GB, s'il est référencé par une adresse virtuelle de 64 bits (BREMi=1). Il peut être placé dans tout segment de type 64K/4MB s'il est référencé par l'intermédiaire d'un descripteur CASD. Il peut être directement référençable si le segment 64K/4MB est accessible avec SHR et ASN égaux à zéro, ou avec le contenu du registre CSR.

Quel que soit le mode d'exécution, le mécanisme d'appel de procédure remplit les quatre fonctions principales suivantes :
a) Vérification du droit d'accès, c'est-à-dire du droit de l'appelant (APT) à appeler l'appelé (APE) en fonction des valeurs d'anneaux respectifs,
b) Détermination du nouveau numéro d'anneau,
c) Mise à jour de la pile et des registres de pile,
d) Branchement sur le point d'entrée de la procédure.

En Mode 32 et en Mode 32/64, les mécanismes d'appel et de retour diffèrent légèrement selon la nécessité d'un changement automatique de mode d'exécution et/ou la présence d'un descripteur de procédure non-accessible directement par une adresse virtuelle de 32 bits.

Pour la suite de l'exposé, les définitions suivantes seront utilisées :
Espace d'adressage PCB (EAPCB): Ensemble des segments directement accessible lorsque le processus est exécuté en Mode 32.
Espace d'adressage courant (EAC): Ensemble des segments appartenant à l'espace d'adressage EAX accessible par l'intermédiaire du contenu du registre CSR. En cas de mise à zéro du registre CSR, l'espace EAPCB et l'espace d'adressage courant EAC représentent le même ensemble de segments.
Nouvel espace d'adressage (NEA): Ensemble des segments appartenant à l'espace d'adressage accessible par l'intermédiaire du second mot d'un descripteur CASD.

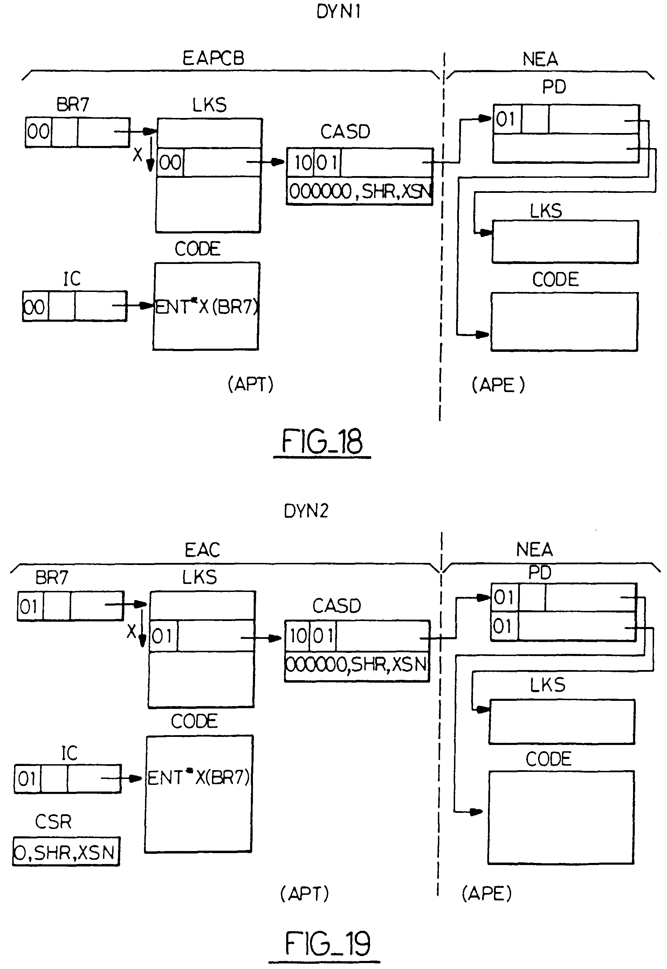

Au cours de l'exécution d'un processus, l'invention prévoit trois cas de changement dynamique de mode d'exécution lors d'un appel de procédure et lors du retour correspondant. Ces cas dénommés DYN1, DYN2 et DYN3 sont respectivement décrits en référence aux figures 18,19 et 20.

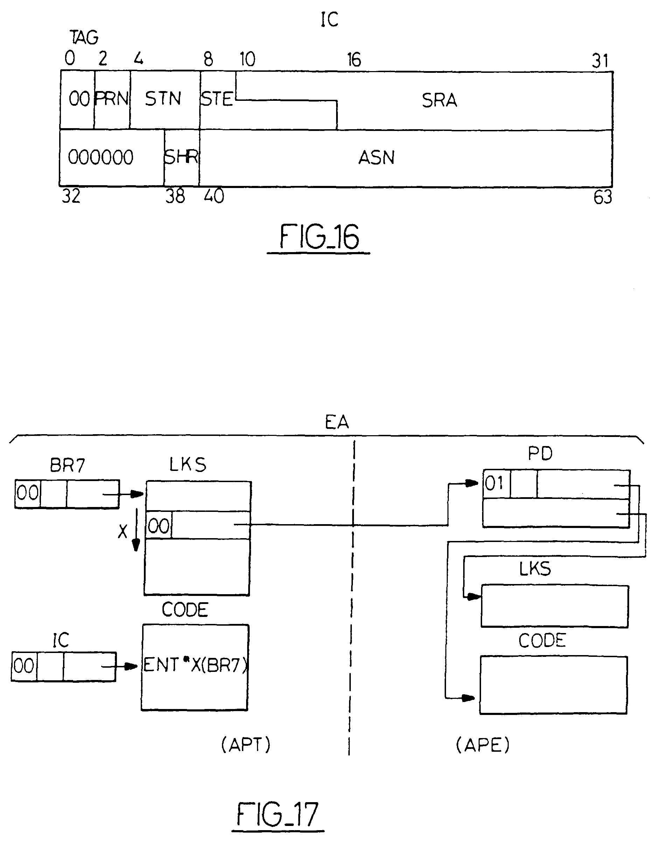

Auparavant il est opportun de présenter rapidement les divers formats du registre du compteur d'instructions IC. Plus particulièrement, la figure 16 illustre le format du registre IC correspondant au Mode 64 pour TAG=00. Dans ce cas, le format (constitué d'un mot double) est analogue à celui décrit pour les descripteurs 64K/4MB/ITS64 (illustré figure 6) avec équivalence entre le champ RING (montré à la figure 6) et le champ PRN (montré à la figure 16). Pour TAG=10, le format du registre IC est analogue à celui décrit pour les descripteurs 4GB/ITS64 (illustré figure 4). En Modes 32 et 32/64 le registre IC est constitué d'un seul mot dont le format est analogue à celui décrit pour les descripteurs 64K/4MB/ITS32 (illustré figure 8) avec équivalence entre le champ EAR (montré à la figure 8) et le champ PRN du registre IC. En Mode 32 le champ TAG est toujours égal à 00. Par contre, en Mode 32/64 le champ TAG peut prendre la valeur 00 (le registre IC contient l'adresse virtuelle de la prochaine instruction à exécuter) ou la valeur 01 (le contenu du registre d'instruction doit être concaténé avec le contenu du registre CSR pour former l'adresse virtuelle de la prochaine instruction à exécuter).

D'une façon générale, un mécanisme d'appel de procédure dans un espace d'adressage EA donné, à partir d'une procédure appelante APT vers une procédure appelée APE, et utilisant un descripteur de procédure PD s'effectue selon le schéma de base illustré à la figure 17. L'utilisation d'un descripteur de procédure dans un mécanisme d'appel permet de faire sans difficulté les contrôles de cohérence nécessaires à assurer l'intégrité du système. De plus une convention logicielle exploitant le mécanisme d'indirection permet d'avoir une résolution statique et dynamique très performante des références externes au programme à exécuter (cette indirection est repérée sur les figures 17 à 20 par l'astérisque suivant le code ENT).

Pour cela le compilateur regroupe les références à résoudre dans une table dénommée section d'édition de liens LKS. Les appels de procédure externes au code d'instructions CODE utilisent une indirection pour atteindre le descripteur PD de la procédure appelée APE.
Les avantages de cette méthode sont nombreux:
- Elle permet l'indépendance du code et des références externes au programme.
- Elle permet de l'édition de liens dynamique avec partage de code en utilisant des régles de recherches locales (chaque programme doit avoir une sous-section de liens privée).
- Elle permet de l'édition de liens dynamique sur les machines avec mémoire-cache d'instructions sans vidage de la mémoire-cache après résolution de la référence externe.
- Enfin, la résolution d'une référence externe n'est faite qu'une seule fois quelque soit le nombre d'utilisations dans le code.

En première approximation le compilateur produit deux objets. Le premier contient le code-objet CODE (ensemble des instructions à exécuter) et le second une section d'édition des liens LKS qui contient un mot par référence externe à résoudre plus des constantes utilisées par le code. Par ailleurs une table annexe contient les noms symboliques des références externes (pour l'édition des liens statique ou dynamique). La section d'édition des liens LKS et le code CODE peuvent être regroupés dans un même segment pour des raisons d'économie de segment. De même plusieurs unités de compilation peuvent être aussi regroupées.

A l'exécution, l'instruction ENT (ENTER) va chercher au déplacement X par rapport à la base BR7 soit directement un descripteur de procédure PD s'il n'y a pas d'indirection à ce niveau (cas illustré à la figure 17) soit un autre descripteur d'adresse s'il y a une indirection (par exemple dans les cas illustrés aux figures 18, 19 et 20). Le descripteur de procédure PD est lu après les contrôles d'accès (privilèges) pour obtenir l'adresse du point d'entrée dans la procédure appelée et la valeur à ranger dans le registre de base BR7.

Ainsi donc, le mécanisme d'appel de procédure met en jeu les deux instructions PRSK et ENT. La première instruction PRSK prépare la zone de pile qui sert à la sauvegarde du contexte (ensemble des contenus instantanés des registres affectés au processus) et au passage des paramètres. Cette instruction a pour argument un masque SAM désignant les registres à sauvegarder, la taille de la zone des paramètres et le numéro du registre qui contiendra en fin d'instruction une adresse permettant de ranger les paramètres dans la zone réservée. La deuxième instruction ENT effectue le "transfert de contrôle", c'est-à-dire le passage à une nouvelle séquence de code d'instructions à exécuter. Le fait de séparer la préparation de l'appel de l'appel lui-même permet de libérer des registres pour effectuer la séquence de passage des paramètres.

Il est à remarquer que le registre pointant le contexte est le registre de base BR0 pour le contexte de la procédure appelante. C'est le registre cité dans l'instruction PRSK pour le nouveau contexte jusqu'à l'exécution de l'instruction d'appel ENT. Comme le registre de base BR0 est systématiquement sauvé, il est possible de remonter la chaîne des appels.

Au retour, l'instruction EXIT dépile le contexte et réinitialise les différents registres avec les valeurs sauvegardées.

### Cas N° 1 (DYN1): du Mode 32 au Mode 32/64.

Le passage du mode 32 au mode 32/64 se fait simplement en insérant un descripteur de changement d'espace d'adresse CASD sur le chemin d'accès au descripteur de procédure PD. Les deux mots du descripteur CASD forment une adresse sur 64 bits permettant de lire le descripteur de procédure PD. Comme la résolution des références externes est faite sous le contrôle du système d'exploitation sans modification du format de la table LKS ou du descripteur de procédure, l'insertion du descripteur CASD est totalement transparente aux anciens programmes. Le deuxième mot du descripteur CASD (de format identique à celui du registre CSR) indique quel est le nouvel espace d'adressage NEA qui sera activé comme espace EAC. Il n'est pas nécessaire que le code ou la section d'édition des liens de la procédure appelée soit dans l'espace EAC. Le fait de placer tout ou partie dans l'espace EAC dépend de l'usage que l'on veut faire des nouvelles possibilités offertes par l'invention (extension de l'espace virtuel, adressage absolu, accès à l'espace DX).

Ainsi donc, le changement dynamique survient lors d'une procédure d'appel (CALL), par exemple avec l'exécution d'une instruction ENT, dans le cas où le premier descripteur conduisant à la procédure appelée APE est de type CASD. Cet accès est réalisé de la façon illustrée à la figure 18. Le registre compteur d'instructions IC présente un format à 32 bits avec le champ TAG mis à 00. Le registre IC pointe dans l'espace EAPCB l'adresse d'une entrée ENT dans la table de code d'instructions (table CODE). L'instruction ENT contient un champ d'adresse appelé syllabe d'adresse significative d'une indirection appelant le registre de base BR7 (voir le brevet US 4.385.352 et le brevet US 4.297.743). Le développement de la syllabe d'adresse en combinaison avec le contenu du registre de base BR7 pointe vers une entrée dans la table de liaison (table LKS) dont le contenu permet de pointer vers le descripteur de procédure réel PD du type PD32 localisé dans le nouvel espace d'adresse NEA. Le champ TAG du descripteur PD est mis à la valeur 01, significative d'un format de mot double, et les champs d'adressage segmenté du descripteur PD sont chargés du contenu des champs correspondants du descripteur CASD. Ainsi donc le système utilisera de façon classique le premier mot du descripteur PD pour déterminer dans la table CODE du nouvel espace d'adressage NEA l'entrée du code instruction de la procédure appelée APE et le deuxième mot du descripteur PD pour déterminer l'entrée correspondante dans la table de liaison LKS et trouver les informations nécessaires à l'exécution de la procédure appelée APE.

De plus le champ TAG du registre IC est chargé dans le champ des bits 2 et 3 du premier mot du descripteur CASD qui devient alors un descripteur direct (TAG=00). Enfin le mode d'exécution du processus passe en Mode 32/64 (ES=01).

Lors de l'exécution d'une instruction de retour EXIT, le changement dynamique vers le Mode 32/64 interviendra avec le dépilage de la zone ZS si la procédure appelante APT était exécutable dans ce mode, c'est-à dire si le champ "format" (4 premiers bits) du mot SAM de l'élément de pile correspondant est égal à 0100.

### Cas N°2 (DYN2): du Mode 32/64 au Mode 32/64 (pseudo-changement).

Lorsqu'un processus est exécuté en Mode 32/64, le mécanisme de changement dynamique de mode est utilisé pour changer l'espace d'adressage courant EAC. Dans ce cas, le mécanisme de changement dynamique reste voisin de celui précédemment décrit; il est illustré à la figure 19. Le descripteur CASD est utilisé pour pointer le descripteur de procédure PD dans le nouvel espace d'adressage. De plus, le champ TAG du registre IC est chargé dans le champ des bits 2 et 3 du premier mot du descripteur CASD. Enfin le registre CSR est chargé du contenu du second mot du descripteur CASD (le contenu précédent ayant été sauvegardé dans la pile). Bien entendu, le mode d'exécution du processus reste le Mode 32/64.

### Cas N° 3 (DYN3): du Mode 32/64 vers le Mode 32.

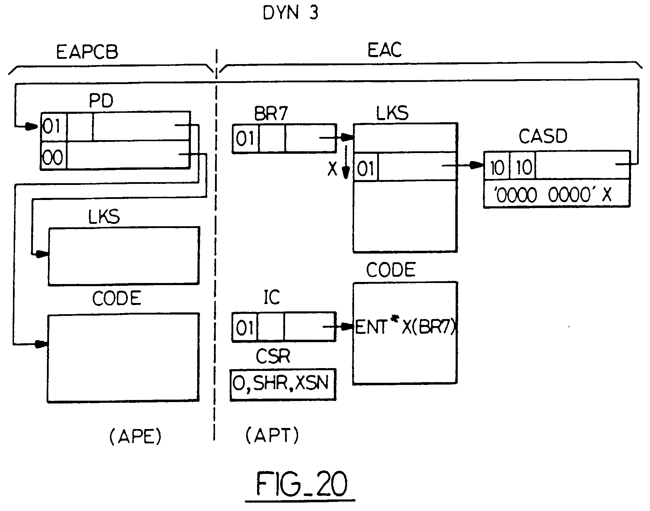

Lorsqu'un processus est exécuté en Mode 32/64, le changement dynamique est autorisé par l'instruction ENT. Ce changement se produit lorsque le champ des bits 2 et 3 d'un descripteur CASD est égal à "10". Le mécanisme de changement dynamique correspondant est illustré à la figure 20.

Ici encore, le descripteur CASD est utilisé pour extraire le descripteur de procédure PD. De plus le champ TAG du registre IC est mis à 00 et le registre CSR est chargé du contenu du second mot du descripteur CASD (le contenu précédent ayant été sauvegardé dans la pile). Enfin le mode d'exécution du processus passe en Mode 32.

Lors de l'exécution de l'instruction EXIT, le changement dynamique interviendra selon la valeur des 4 premiers bits du mot SAM de la pile (0000=Mode 32 ou 0100=Mode 32/64).

Ainsi donc le changement dynamique de mode d'exécution donne beaucoup de souplesse à l'utilisateur vis-à-vis des programmes existants écrits selon un format de 32 bits. Ces programmes sont susceptibles d'être localisés (y compris le code) dans le domaine mémoire 64 bits DX. Ils sont également susceptibles d'appeler des procédures et d'autres programmes et/ou sous-routines écrits selon un format de 64 bits et exécutables en Mode 32/64. Dans ce dernier mode d'exécution, les programmes sont capables de gérer les deux types d'adressage 32 et 64 bits.

L'invention n'est pas limitée au seul procédé ici décrit mais concerne également un système informatique comportant moyens matériels et logiciels pour mettre en oeuvre le procédé ci-avant présenté dans toutes ses variantes. Le système selon l'invention comporte le sous-système processeur 100 structuré autour d'un ou plusieurs processeurs centraux CPU 106 et d'une mémoire centrale MMU 102, chaque processeur comprenant des moyens micro-programmés pour effectuer la gestion de la mémoire centrale 102 et de contrôleurs d'entrée/sortie IOC 108 vers le sous-système de périphériques 104, notamment vers des moyens de mémoire de masse de capacité suffisante pour l'adressage virtuel, et des moyens logiciels, notamment un ensemble de programmes regroupés sous le nom de système d'exploitation, pour permettre en association avec les moyens micro-programmés la mise en oeuvre du procédé selon l'invention. D'une façon pratique, les opérations spécifiques décrites dans le cadre de l'invention sont réalisées par logiciel et/ou micro-programmation et/ou circuits logiques.

## Revendications

1. Procédé d'exploitation de la mémoire dans un système informatique du type à adressage virtuel, caractérisé en ce que:
- on organise un premier domaine mémoire (DX) d'une première taille d'adresse NX ayant NX bits pour adresser logiquement les emplacements mémoire du dit premier domaine,
- on définit dans le premier domaine mémoire (DX) une pluralité d'espaces d'adressages interchangeables (EAX), chacun de structure identique, d'une deuxième taille d'adresse NL ayant NL bits pour adresser logiquement les emplacements mémoire des dits espaces d'adressage interchangeables (EAX), tel que NL soit inférieur à NX,
- on construit un premier format d'adressage (FX1) de dimension NX pour accéder aux espaces d'adressage interchangeables (EAX) par extension d'un second format d'adressage (FL) de dimension NL utilisé pour l'adressage relatif des emplacements mémoire dans les dits espaces d'adressage interchangeables (EAX) au moyen d'une zone complémentaire contenant au moins un champ destiné à recevoir un identificateur (ASN) de l'espace d'adressage interchangeable (EAX) correspondant,
- on affecte de façon temporaire et interchangeable un des espaces d'adressage interchangeables (EAX) comme espace d'adressage courant (EAC) à un deuxième domaine mémoire (DL) utilisant le deuxième format d'adressage (FL)
- on mémorise dans un registre réservé (CSR) l'identificateur (ASN) de l'espace d'adressage interchangeable (EAX) attribué comme espace d'adressage courant (EAC).

2. Procédé selon la revendication 1, caractérisé en ce que le deuxième domaine mémoire (DL) comporte un espace d'adressage permanent (EAPCB) de structure identique à celle des espaces d'adressage interchangeables (EAX), l'espace d'adressage permanent (EAPCB) étant repérable dans le premier domaine mémoire (DX) par un identificateur (ASN) de valeur égale à zéro.

3. Procédé selon l'une des revendications précédentes, caractérisé en ce que les espaces d'adressage sont du type segmenté, de façon optionnelle à plusieurs dimensions et/ou partageables par plusieurs processus.

4. Procédé selon l'une des revendications précédentes, caractérisé en ce que l'on définit dans le premier domaine mémoire (DX), une pluralité de segments accessibles à partir d'un deuxième format d'adressage (FX2) de dimension NX.

5. Procédé selon l'une des revendications précédentes, caractérisé en ce que les premier et deuxième formats d'adressage (FX1) et (FX2) incorporent une variante (AA64) permettant l'adressage absolu direct en mémoire physique.

6. Procédé selon l'une des revendications précédentes, caractérisé en ce que l'on définit un mode d'exécution des processus (Mode 32/64) supportant les deux dimensions d'adressage NX et NL.

7. Procédé selon la revendication 6, caractérisé en ce que l'on définit un autre mode d'exécution de processus (Mode 32) supportant la dimension d'adressage NL, les deux modes d'exécution de processus (Mode 32 et Mode 32/64) étant commutables de l'un vers l'autre, soit automatiquement par changement dynamique, soit par programmation.

8. Procédé selon l'une des revendications précédents, caractérisé en ce que :
- on choisit pour les espaces d'adressage de dimension NL, les espaces d'adressage interchangeables (EAX) et le cas échéant l'espace d'adressage permanent (EAPCB), des descripteurs de procédure (PD) de structure de base identique,
- on définit des descripteurs de changement d'espace d'adressage (CASD), de structure de base identique à celle des descripteurs de procédure (PD),
- on organise, à partir d'un processus exécutable dans un espace d'adressage donné, l'appel d'une procédure (APE) exécutable dans une autre espace d'adressage, par l'intermédiaire d'un descripteur de type (CASD).

9. Procédé selon la revendication 8, caractérisé en ce que les descripteurs de type (CASD) comportent un champ destiné à recevoir l'identificateur de l'espace d'adressage contenant la procédure appelée (APE) et le pointeur de la procédure appelée dans ce nouvel espace d'adressage (NEA).

10. Procédé selon la revendication 7 prise en combinaison avec la revendication 9, caractérisé en ce que la commutation automatique est réalisée de façon dynamique sur un appel de procédure par identification dans un descripteur de procédure du code-type caractéristique d'un descripteur (CASD).

11. Procédé selon l'une des revendications précédentes du type dans lequel un processus utilise pour l'exécution d'instructions élémentaires des registres d'adresses dénommés registres de base (BR), caractérisé en ce que :
- on définit deux jeux de registres de base de dimension NL et NX, on organise dans une zone mémoire (BREM) un masque dont le contenu de chaque bit (BREMi) est représentatif de la dimension NL et NX de l'adresse chargée ou extraite du registre correspondant (BRi),
- on vérifie lors des mouvements d'adresse la compatibilité de l'adresse chargée ou extraite avec le contenu du bit de dimension (BREMi) correspondant et, le cas échéant, on procède à une réduction ou à une extension automatique d'adresse avec changement en conséquence du bit de dimension (BREMi) correspondant.

12. Système informatique pour mettre en oeuvre le procédé d'exploitation de la mémoire du type à adressage virtuel selon l'une des revendications précédentes, caractérisé en ce que le système informatique comporte un sous-système processeur (100) structuré autour d'un ou plusieurs processeurs centraux CPU (106) et d'une mémoire centrale MMU (102), chaque processeur comprenant des moyens micro-programmés pour effectuer la gestion de la mémoire centrale et de contrôleurs d'entrée/sortie IOC (108) vers le sous-système de périphériques (104), notamment vers des moyens de mémoire de masse de capacité suffisante pour l'adressage virtuel, et des moyens logiciels, notamment un ensemble de programmes regroupés sous le nom de système d'exploitation, pour permettre en associations avec lesdits moyens micro-programmés la mise en oeuvre du procédé selon l'une des revendications précédentes.

## Patentansprüche

1. Verfahren zum Betreiben des Speichers in einem Datenverarbeitungssystem des Typs mit virtueller Adressierung, dadurch gekennzeichnet, daß:
- ein erster Speicherbereich (DX) mit einer ersten Adressengröße NX mit NX Bits organisiert wird, um die Speicherplätze des ersten Bereichs logisch zu adressieren,
- im ersten Speicherbereich (DX) mehrere austauschbare Adreßräume (EAX) mit jeweils übereinstimmender Struktur und einer zweiten Adressengröße NL mit NL Bits definiert werden, um die Speicherplätze der austauschbaren Adreßräume (EAX) logisch zu adressieren, derart, daß NL kleiner als NX ist,
- ein erstes Adressierungsformat (FX1) der Dimension NX für den Zugriff auf die austauschbaren Adressierungsräume (EAX) konstruiert wird, indem ein zweites Adressierungsformat (FL) der Dimension NL, das für die relative Adressierung der Speicherplätze in den austauschbaren Adressierungsräumen (EAX) verwendet wird, mittels einer komplementären Zone erweitert wird, die wenigstens ein Feld enthält, das dazu vorgesehen ist, einen Namen (ASN) des entsprechenden austauschbaren Adressierungsraums (EAX) zu empfangen,
- vorübergehend und austauschbar einer der austauschbaren Adressierungsräume (EAX) als momentaner Adressierungsraum (EAC) einem das zweite Adressierungsformat (FL) verwendenden zweiten Speicherbereich (DL) zugeordnet wird,
- in einem reservierten Register (CSR) der Name (ASN) desjenigen austauschbaren Adressierungsraums (EAX) gespeichert wird, der als momentaner Adressierungsraum (EAC) zugewiesen ist.

2. Verfahren nach Anspruch 1, dadurch gekennzeichnet, daß der zweite Speicherbereich (DL) einen permanenten Adressierungsraum (EAPCB) mit einer Struktur enthält, die mit derjenigen der austauschbaren Adressierungsräume (EAX) völlig übereinstimmt, wobei der permanente Adressierungsraum (EAPCB) im ersten Speicherbereich (DX) durch einen Namen (ASN), dessen Wert gleich Null ist, benennbar ist.

3. Verfahren nach einem der vorangehenden Ansprüche, dadurch gekennzeichnet, daß die Adressierungsräume vom Typ mit optionaler Segmentierbarkeit mit mehreren Dimensionen sind und/oder mehreren Prozessen gemeinsam sind.

4. Verfahren nach einem der vorangehenden Ansprüche, dadurch gekennzeichnet, daß im ersten Speicherbereich (DX) mehrere Segmente definiert werden, auf die anhand eines zweiten Adressierungsformats (FX2) mit Dimension NX zugegriffen werden kann.

5. Verfahren nach einem der vorangehenden Ansprüche, dadurch gekennzeichnet, daß die ersten und zweiten Adressierungsformate (FX1) und (FX2) eine Variante (AA64) enthalten, die die direkte Absolutadressierung im physikalischen Speicher ermöglicht.

6. Verfahren nach einem der vorangehenden Ansprüche, dadurch gekennzeichnet, daß ein Ausführungsmodus der Prozesse (Modus 32/64) definiert wird, der die zwei Adressierungsdimensionen NX und NL unterstützt.

7. Verfahren nach Anspruch 6, dadurch gekennzeichnet, daß ein anderer Prozeßausführungsmodus (Modus 32) definiert wird, der die Adressierungsdimension NL unterstützt, wobei zwischen den zwei Prozeßausführungsmodi (Modus 32 und Modus 32/64) entweder automatisch durch dynamischen Wechsel oder durch Programmierung umgeschaltet werden kann.

8. Verfahren nach einem der vorangehenden Ansprüche, dadurch gekennzeichnet, daß:
- für die Adressierungsräume mit Dimension NL, für die austauschbaren Adressierungsräume (EAX) und gegebenenfalls für den permanenten Adressierungsraum (EAPCB) Prozedurdeskriptoren (PD) mit übereinstimmender Grundstruktur gewählt werden;
- Adressierungsraum-Änderungsdeskriptoren (CASD) definiert werden, deren Grundstruktur mit der der Prozedurdeskriptoren (PD) übereinstimmt;
- ausgehend von einem in einem gegebenen Adressierungsraum ausführbaren Prozeß der Aufruf einer in einem anderen Adressierungsraum ausführbaren Prozedur (APE) über einen Deskriptor des Typs (CASD) organisiert wird.

9. Verfahren nach Anspruch 8, dadurch gekennzeichnet, daß die Deskriptoren des Typs (CASD) ein Feld enthalten, das dazu bestimmt ist, den Namen des Adressierungsraums zu empfangen, der die aufgerufene Prozedur (APE) sowie den Zeiger der aufgerufenen Prozedur in diesem neuen Adressierungsraum (NEA) enthält.

10. Verfahren nach Anspruch 7 in Verbindung mit Anspruch 9, dadurch gekennzeichnet, daß das automatische Umschalten bei einem Prozeduraufruf dynamisch durch Identifizierung eines charakteristischen Codetyps eines Deskriptors (CASD) in einem Prozedurdeskriptor ausgeführt wird.

11. Verfahren nach einem der vorangehenden Ansprüche des Typs, in dem ein Prozeß für die Ausführung von elementaren Befehlen als Basisregister (BR) bezeichnete Adreßregister verwendet, dadurch gekennzeichnet, daß:
- zwei Sätze von Basisregistern mit Dimension NL bzw. NX definiert werden, in einer Speicherzone (BREM) eine Maske organisiert wird, wovon der Inhalt jedes Bits (BREMi) die Dimension NL bzw. NX der in das entsprechende Register (BRi) geladenen oder aus diesem entnommenen Adresse darstellt,
- bei Bewegungen der Adresse die Kompatibilität der geladenen oder entnommenen Adresse mit dem Inhalt des entsprechenden Dimensionsbits (BREMi) geprüft wird und gegebenenfalls eine automatische Reduzierung oder Erweiterung der Adresse vorgenommen wird, die folglich von einer Änderung des entsprechenden Dimensionsbits (BREMi) begleitet wird.

12. Datenverarbeitungssystem für die Ausführung des Verfahrens zum Betreiben des Speichers des Typs mit virtueller Adressierung nach einem der vorangehenden Ansprüche, dadurch gekennzeichnet, daß das Datenverarbeitungssystem einen Untersystem-Prozessor (100) enthält, der um einen oder mehrere Zentralprozessoren CPU (106) und einen Zentralspeicher MMU (102) strukturiert ist, wobei jeder Prozessor versehen ist mit mikroprogrammierten Mitteln für die Ausführung der Steuerung des Zentralspeichers und von Eingangs/Ausgangs-Steuereinrichtungen IOC (108) zum Peripheriegerät-Untersystem (104), insbesondere zu Massenspeichermitteln mit für die virtuelle Adressierung ausreichender Kapazität, und Softwaremitteln, insbesondere einer Gruppe von Programmen, die im Namen des Betriebssystems umgruppiert sind, um in Verbindung mit den mikroprogrammierten Mitteln das Verfahren nach einem der vorangehenden Ansprüche auszuführen.

## Claims

1. A method of exploiting the memory in a data processing system of the virtual addressing type, characterised in that:
- a first memory field (DX) is organised, of a first address size NX having NX bits for logically addressing the memory locations of said first field,
- in the first memory field (DX) a plurality of interchangeable addressing spaces (EAX) is defined, each identical in structure, of a second address size NL having NL bits for logically addressing the memory locations of said interchangeable addressing spaces (EAX), such that NL is less than NX,
- a first addressing format (FX1), of dimension NX, is constructed for accessing the interchangeable addressing spaces (EAX) by extending a second addressing format (FL) of dimension NL used for the relative addressing of the memory locations in said interchangeable addressing spaces (EAX) by means of an additional zone containing at least one field intended to receive an identifier (ASN) of the corresponding interchangeable addressing space (EAX).
- one of the interchangeable addressing spaces (EAX) is assigned temporarily and interchangeably as a current addressing space (EAC) to a second memory field (DL) using the second addressing format (FL),
- the identifier (ASN) of the interchangeable addressing space (EAX), assigned as the current addressing space (EAC), is stored in a reserved register (CSR).

2. A method according to Claim 1, characterised in that the second memory field (DL) comprises a permanent addressing space (EAPCB) identical in structure to that of the interchangeable addressing spaces (EAX), the permanent addressing space (EAPCB) being locatable in the first memory field (DX) by an identifier (ASN) with a value equal to zero.

3. A method according to one of the preceding claims, characterised in that the addressing spaces are of the segmented type, optionally having several dimensions and/or capable of being shared by several processes.

4. A method according to one of the preceding claims, characterised in that a plurality of segments accessible from a second addressing format (FX2), of dimension NX, is defined in the first memory field (DX).

5. A method according to one of the preceding claims, characterised in that the first and second addressing formats (FX1) and (FX2) incorporate a variant (AA64) permitting direct absolute addressing in the physical memory.

6. A method according to one of the preceding claims, characterised in that an embodiment of the processes (32/64 mode), supporting both addressing dimensions NX and NL, is defined.

7. A method according to Claim 6, characterised in that another process embodiment (32 mode), supporting the addressing dimension NL, is defined, such that the two process embodiments (32 mode and 32/64 mode) can be switched from one to the other, either automatically by dynamic change or by programming.

8. A method according to one of the preceding claims, characterised in that:
- procedure descriptors (PD) are chosen, with an identical basic structure, for the addressing spaces of dimension NL, the interchangeable addressing spaces (EAX) and, where appropriate, the permanent addressing space (EAPCB),
- change-of-addressing-space descriptors (CASD) are defined, with a basic structure identical to that of the procedure descriptors (PD),
- using a process that can be executed in a given addressing space, a call on a procedure (APE) that can be executed in another addressing space, via a (CASD)-type descriptor, is organised.

9. A method according to Claim 8, characterised in that the (CASD)-type descriptors comprise a field intended to receive the identifier of the addressing space containing the called procedure (APE) and the pointer for the called procedure in this new addressing space (NEA).

10. A method according to Claim 7 in combination with Claim 9, characterised in that the automatic switching is performed dynamically when a procedure is called by identification in a procedure descriptor of the code-type characteristic of a descriptor (CASD).

11. A method according to one of the preceding claims, of the type in which a process uses address registers called basic registers (BR) for executing elementary instructions, characterised in that:
- two sets of basic registers of dimension NL and NX are defined, a mask is organised in a memory zone (BREM), the content of each bit (BREMi) of which mask is representative of the dimension NL and NX of the address loaded into or extracted from the corresponding register (BRi),
- at the time of address movements, a check is made of the compatibility of the address loaded or extracted with the content of the corresponding dimension bit (BREMi) and, where appropriate, the address is reduced or extended automatically with a consequent change to the corresponding dimension bit (BREMi).

12. A data-processing system for implementing the method of exploiting the memory of the virtual addressing type according to one of the preceding claims, characterised in that the data processing system comprises a processing subsystem (100) structured around one or more CPU central processors (106) and an MMU central memory (102), each processor comprising firmware-based means for managing the central memory and IOC input-output controllers (108) to the peripheral subsystem (104), particularly to the bulk memory means of sufficient capacity for virtual addressing, and software means, particularly a set of programs grouped under the name of operating system to allow, in association with said firmware-based means, the implementation of the method according to one of the preceding claims.
